# EUROPEAN PATENT APPLICATION

(11) **EP 4 589 906 A1**
(43) Date of publication of application: **23.07.2025**
(21) Application number: 23890745.5
(22) Date of filing: 14.11.2023
(51) Int. Cl.: H04L 41/0803

(54) **METHOD AND APPARATUS FOR DEPLOYING VIRTUALIZED NETWORK FUNCTION**

(30) Priority: 18.11.2022 CN 202211446371
(71) Applicant: Huawei Technologies Co., Ltd., Shenzhen, Guangdong 518129 (CN)
(72) Inventor: GENG, Yansong, Shenzhen, Guangdong 518129 (CN); YANG, Xu, Shenzhen, Guangdong 518129 (CN)
(74) Representative: Isarpatent
(86) International application number: PCT/CN2023/131392
(87) International publication number: WO 2024/104312

(57) **Abstract**

This application provides a method for deploying a virtualized network function and a communication apparatus. In the method, a value of a first key/value pair in a first VNFD template used to deploy a deployment unit of a first VNF is used to control whether the first key/value pair is validated when a to-be-deployed-on node is matched for the deployment unit of the first VNF. The method can meet a requirement for deployment at different sites based on one VNFD template, thereby meeting a requirement for more widespread and flexible VNF deployment and scheduling.

## Description

This application claims priority to Chinese Patent Application No. 202211446371.3, filed with the China National Intellectual Property Administration on November 18, 2022 and entitled "METHOD FOR DEPLOYING VIRTUALIZED NETWORK FUNCTION AND APPARATUS", which is incorporated herein by reference in its entirety.

### TECHNICAL FIELD

This application relates to the communication field, and more specifically, to a method for deploying a virtualized network function and an apparatus.

### BACKGROUND

In a containerization scenario, a virtualized network function (Virtualized Network Function, VNF) needs to deploy a plurality of Pods based on a virtualized network function descriptor (Virtualized Network Function Descriptor, VNFD) template. The VNFD template expresses a label requirement of the Pod on a to-be-deployed-on node. A node that matches the label requirement may be selected in a resource pool based on the label requirement, and the Pod is deployed on the node. Because a manner in which the existing VNFD template expresses the label requirement of the Pod on the node is fixed, an existing label matching mechanism cannot meet a requirement for more widespread deployment and scheduling.

### SUMMARY

This application provides a method for deploying a virtualized network function and an apparatus, to meet a requirement for more widespread and flexible VNF deployment and scheduling.

According to a first aspect, a method for deploying a virtualized network function is provided. The method may be performed by a first network element, or may be performed by a chip or a circuit configured in a first network element. This is not limited in this application.

The method may include: The first network element obtains a first virtualized network function descriptor VNFD template, where the first VNFD template is used to deploy a deployment unit of a first VNF, and the first VNFD template includes a plurality of key/value pairs. The first network element obtains a first value of the key/value pair, where the first value includes a value of a first key/value pair in the plurality of key/value pairs, and the value of the first key/value pair indicates that the first key/value pair does not function on deployment of the deployment unit of the first VNF. The first network element sends a first request message to a container as a service CaaS manager based on the first VNFD template and the first value, where the first request message is used to request to deploy the deployment unit of the first VNF on a node that meets the first VNFD template and the first value of the key/value pair.

In the foregoing technical solution, whether the first key/value pair is validated is controlled via the value of the first key/value pair in the first VNFD template. This mechanism can meet a requirement for deployment at different sites based on one VNFD template, thereby meeting a requirement for more widespread and flexible VNF deployment and scheduling. In addition, publishing of the VNFD template is simpler and more adaptive.

In some implementations of the first aspect, the first request message includes the first VNFD template and the first value; or the first request message includes an index of the first VNFD template and the first value; or the first request message includes a third VNFD template and a third value of one or more key/value pairs in the third VNFD template, where the third VNFD template is the first VNFD template and does not include the first key/value pair, and the third value is the first value and does not include the value of the first key/value pair.

In the foregoing technical solution, after the value of the first key/value pair indicates that the first key/value pair does not function on the deployment of the deployment unit of the first VNF, the first key/value pair and the value of the key/value pair are not transferred to the CaaS manager, so that the CaaS manager does not introduce an attribute requirement of the key/value pair on a node when selecting a to-be-deployed-on node.

In some implementations of the first aspect, the node that meets the first VNFD template and the first value of the key/value pair includes: a node whose label matches the first VNFD template and the first value, or a node whose label matches the third VNFD template and the third value.

In some implementations of the first aspect, the value of the first key/value pair is a value of KEY in the first key/value pair.

In some implementations of the first aspect, the value of the first key/value pair is a value of VALUE in the first key/value pair.

In some implementations of the first aspect, the value of the first key/value pair is a value of one of at least one VALUE included in the first key/value pair.

In some implementations of the first aspect, that the first request message is used to request to deploy the deployment unit of the first VNF on a node that meets the first VNFD template and the first value includes: The first request message is used to request to re-deploy the deployment unit of the first VNF on the node that meets the first VNFD template and the first value of the key/value pair, or the first request message is used to request to deploy more deployment units of the first VNF on the node that meets the first VNFD template and the first value of the key/value pair.

In some implementations of the first aspect, before the first network element obtains a first value in the first VNFD, the method further includes: The first network element obtains a second value of the key/value pair, where the second value includes the value of the first key/value pair, and the value of the first key/value pair in the second value indicates that the first key/value pair functions on the deployment of the deployment unit of the first VNF. The first network element sends a second request message to the CaaS manager based on the first VNFD template and the second value, where the second request message is used to request to deploy the deployment unit of the first VNF on a node that meets the first VNFD template and the second value.

In the foregoing technical solution, after a VNF is deployed for the first time, when a VNF deployment requirement changes, for example, scale-out or re-deployment is needed, based on the foregoing solution, a VNFD template used when the VNF is deployed for the first time may still be used, and whether the key/value pair is validated is controlled by controlling a value of the key/value pair in the VNFD template, thereby introducing more attribute restrictions or reducing attribute restrictions when selecting a to-be-deployed-on node. In this way, a changing deployment requirement is met by changing the to-be-deployed-on node or adding a new to-be-deployed-on node.

In some implementations of the first aspect, the method further includes: The first network element sends a third request message to the CaaS manager, where the third request message is used to request to configure a label of a first-type node, the third request message includes first information and second information, the first information includes characteristic information of the first-type node, and the second information includes to-be-configured key/value pair information in the label of the first-type node. The first network element receives a third request response message from the CaaS manager, where the third request response message indicates that the label of the first-type node is successfully configured.

In some implementations of the first aspect, the method further includes: The first network element receives a first request response message from the CaaS manager, where the first request response message indicates that the deployment unit of the first VNF is successfully deployed.

In some implementations of the first aspect, the deployment unit is a Pod, or the deployment unit is a virtual machine VM.

In some implementations of the first aspect, the first network element is a virtualized network function manager VNFM or a network functions virtualization orchestrator NFVO.

According to a second aspect, a method for deploying a virtualized network function is provided. The method may be performed by a CaaS manager, or may be performed by a chip or a circuit configured in a CaaS manager. This is not limited in this application.

The method may include: The container as a service CaaS manager receives a first request message from a first network element, where the first request message is used to request to deploy a deployment unit of a first VNF on a node that meets a first virtualized network function descriptor VNFD template and a first value, the first VNFD template is used to deploy the deployment unit of the first VNF, the first VNFD template includes one or more key/value pairs, the first value is a value of the key/value pair, the first value includes a value of a first key/value pair in the one or more key/value pairs, and the value of the first key/value pair indicates that the first key/value pair does not function on deployment of the deployment unit of the first VNF. The CaaS manager deploys the deployment unit of the first VNF based on the first request message.

For beneficial effect of the second aspect, refer to the descriptions of the first aspect. Details are not described herein again.

In some implementations of the second aspect, the first request includes the first VNFD template and the first value of the key/value pair; or the first request includes an index of the first VNFD template and the first value of the key/value pair.

In some implementations of the second aspect, the node that meets the first VNFD template and the first value of the key/value pair includes: a node whose label matches the first VNFD template and the first value.

In some implementations of the second aspect, the value of the first key/value pair is a value of KEY in the first key/value pair.

In some implementations of the second aspect, the value of the first key/value pair is a value of VALUE in the first key/value pair.

In some implementations of the second aspect, the value of the first key/value pair is a value of one of at least one VALUE included in the first key/value pair.

In some implementations of the second aspect, that the first request message is used to request to deploy a deployment unit of a first VNF on a node that meets a first VNFD template and a first value of a key/value pair includes: The first request message is used to request to re-deploy the deployment unit of the first VNF on the node that meets the first VNFD template and the first value of the key/value pair, or the first request message is used to request to deploy more deployment units of the first VNF on the node that meets the first VNFD template and the first value of the key/value pair.

In some implementations of the second aspect, before the CaaS manager receives a first request message from a first network element, the method further includes: The CaaS manager receives a second request message from the first network element, where the second request message is used to request to deploy the deployment unit of the first VNF on a node that meets the first VNFD template and a second value, the second value is a value of the key/value pair, the second value includes the value of the first key/value pair in the plurality of key/value pairs, and a value of a second key/value pair in the second value indicates that the second key/value pair functions on the deployment of the deployment unit of the first VNF. The CaaS manager deploys the deployment unit of the first VNF based on the second request message.

In some implementations of the second aspect, when the first request message is used to request to re-deploy the deployment unit of the first VNF, that the CaaS manager deploys the deployment unit of the first VNF based on the first request message includes: If a first node and a second node are a same node, the CaaS manager deploys the deployment unit of the first VNF on the second node; otherwise, the CaaS manager re-deploys a first deployment unit from the second node to the first node, where the first node is a node that meets the first VNFD template and the first value and on which the deployment unit of the first VNF is to be re-deployed, and the second node is a node on which the deployment unit of the first VNF is currently deployed and that meets the first VNFD template and the second value.

In some implementations of the second aspect, the method further includes: The CaaS manager receives a third request message from the first network element, where the third request message is used to request to configure a label of a first-type node, the third request message includes first information and second information, the first information includes characteristic information of the first-type node, and the second information includes to-be-configured key/value pair information in the label of the first-type node. The CaaS manager sends a third request response message to the first network element, where the third request response message indicates that the label of the first-type node is successfully configured.

In some implementations of the second aspect, the method further includes: The CaaS manager sends a first request response message to the first network element, where the first request response message indicates that the deployment unit of the first VNF is successfully deployed.

In some implementations of the second aspect, the deployment unit is a Pod, or the deployment unit is a virtual machine VM.

In some implementations of the second aspect, the first network element is a virtualized network function manager VNFM or a network functions virtualization orchestrator NFVO.

According to a third aspect, a method for deploying a virtualized network function is provided. The method may be performed by a first network element, or may be performed by a chip or a circuit configured in a first network element. This is not limited in this application.

The method may include: The first network element obtains a first virtualized network function descriptor VNFD template, where the first VNFD template is used to deploy a deployment unit of a first VNF, the first VNFD template includes one or more key/value pairs, and a quantity of values of first VALUE in a first key/value pair in the one or more key/value pairs is variable. The first network element obtains a first value of the key/value pair, where the first value includes a first value set including a value of first VALUE. The first network element sends a first request message to a container as a service CaaS manager based on the first VNFD template and the first value, where the first request message is used to request to deploy the deployment unit of the first VNF on a node that meets the first VNFD template and the first value.

In the foregoing technical solution, one VALUE in one key/value pair may have a plurality of values. This method may meet a requirement for flexible cross-resource-pool expansion. An expansion adjustment manner may minimize service interruption, and a resource pool expansion manner does not affect planning of an existing resource pool.

In some implementations of the third aspect, before the first network element obtains a first value, the method further includes: The first network element obtains a second value of the key/value pair, where the second value includes a second value set including a value of first VALUE, the second value set includes values of a second quantity, the first value set includes values of a first quantity, and the second quantity is different from the first quantity. The first network element sends a second request message to the container as a service CaaS manager based on the first VNFD template and the second value, where the second request message is used to request to deploy the deployment unit of the first VNF on a node that meets the first VNFD template and the second value.

In the foregoing technical solution, after a VNF is deployed for the first time, when a VNF deployment requirement changes, for example, scale-out or re-deployment is needed, based on the foregoing solution, a VNFD template used when the VNF is deployed for the first time may still be used. A range of a deployment node that the deployment unit can select may be expanded by updating a quantity of values of VALUE in the key/value pair in the VNFD template, thereby meeting the requirement for flexible cross-resource-pool expansion, and meeting a changing deployment requirement.

In some implementations of the third aspect, that the first request message is used to request to deploy the deployment unit of the first VNF on a node that meets the first VNFD template and the first value includes: The first request message is used to request to re-deploy the deployment unit of the first VNF on the node that meets the first VNFD template and the first value of the key/value pair, or the first request message is used to request to deploy more deployment units of the first VNF on the node that meets the first VNFD template and the first value of the key/value pair.

In some implementations of the third aspect, when the value of first VALUE includes a plurality of values, two adjacent values in the plurality of values are connected by using a first character.

In some implementations of the third aspect, the first request message includes the first VNFD template and the first value; or the first request message includes an index of the first VNFD template and the first value.

In some implementations of the third aspect, the node that meets the first VNFD template and the first value of the key/value pair includes: a node whose label matches the first VNFD template and the first value.

In some implementations of the third aspect, the method further includes: The first network element sends a third request message to the CaaS manager, where the third request message is used to request to configure a label of a first-type node, the third request message includes first information and second information, the first information includes characteristic information of the first-type node, and the second information includes to-be-configured key/value pair information in the label of the first-type node. The first network element receives a third request response message from the CaaS manager, where the third request response message indicates that the label of the first-type node is successfully configured.

In some implementations of the third aspect, the method further includes: The first network element receives a first request response message from the CaaS manager, where the first request response message indicates that the deployment unit of the first VNF is successfully deployed.

In some implementations of the third aspect, the deployment unit is a Pod, or the deployment unit is a virtual machine VM.

In some implementations of the third aspect, the first network element is a virtualized network function manager VNFM or a network functions virtualization orchestrator NFVO.

According to a fourth aspect, a method for deploying a virtualized network function is provided. The method may be performed by a CaaS manager, or may be performed by a chip or a circuit configured in a CaaS manager. This is not limited in this application.

The method may include: The container as a service CaaS manager receives a first request message from a first network element, where the first request message is used to request to deploy a deployment unit of a first VNF on a node that meets a first virtualized network function descriptor VNFD template and a first value, the first VNFD template is used to deploy the deployment unit of the first VNF, the first VNFD template includes one or more key/value pairs, a quantity of values of first VALUE in a first key/value pair in the one or more key/value pairs is variable, the first value is a value of the key/value pair, and the first value includes a first value set including a value of first VALUE. The CaaS manager deploys the deployment unit of the first VNF based on the first request message.

For beneficial effect of the fourth aspect, refer to the descriptions of the third aspect. Details are not described herein again.

In some implementations of the fourth aspect, that the first request message is used to request to deploy a deployment unit of a first VNF on a node that meets a first VNFD template and a first value includes: The first request message is used to request to re-deploy the deployment unit of the first VNF on the node that meets the first VNFD template and the first value of the key/value pair, or the first request message is used to request to deploy more deployment units of the first VNF on the node that meets the first VNFD template and the first value of the key/value pair.

In some implementations of the fourth aspect, the method further includes: The CaaS manager receives a second request message from the first network element, where the second request message is used to request to deploy the deployment unit of the first VNF on a node that meets the first virtualized network function descriptor VNFD template and a second value, the second value is a value of the key/value pair, the second value includes a second value set including a value of first VALUE, the second value set includes values of a second quantity, the first value set includes values of a first quantity, and the second quantity is different from the first quantity. The CaaS manager deploys the deployment unit of the first VNF based on the second request message.

In some implementations of the fourth aspect, when the first request message is used to request to reschedule the deployment unit of the first VNF, that the CaaS manager deploys the deployment unit of the first VNF based on the first request message includes: If a first node and a second node are a same node, the CaaS manager deploys the deployment unit of the first VNF on the second node; otherwise, the CaaS manager re-deploys a first deployment unit from the second node to the first node, where the first node is a node that meets the first VNFD template and the first value and on which the deployment unit of the first VNF is to be re-deployed, and the second node is a node on which the deployment unit of the first VNF is currently deployed and that meets the first VNFD template and the second value.

In some implementations of the fourth aspect, when a value set of VALUE in one of the one or more key/value pairs includes a plurality of values, two adjacent values in the plurality of values are connected by using a first character.

In some implementations of the fourth aspect, the first request message includes the first VNFD template and the first value; or the first request message includes an index of the first VNFD template and the first value.

In some implementations of the fourth aspect, the node that meets the first VNFD template and the first value of the key/value pair includes: a node whose label matches the first VNFD template and the first value.

In some implementations of the fourth aspect, the method further includes: The CaaS manager receives a third request message from the first network element, where the third request message is used to request to configure a label of a first-type node, the second request message includes first information and second information, the first information includes characteristic information of the first-type node, and the second information includes to-be-configured key/value pair information in the label of the first-type node. The CaaS manager sends a third request response message to the first network element, where the third request response message indicates that the label of the first-type node is successfully configured.

In some implementations of the fourth aspect, the method further includes: The CaaS manager sends a first request response message to the first network element, where the first request response message indicates that the deployment unit of the first VNF is successfully deployed.

In some implementations of the fourth aspect, the deployment unit is a Pod, or the deployment unit is a virtual machine VM.

In some implementations of the fourth aspect, the first network element is a virtualized network function manager VNFM or a network functions virtualization orchestrator NFVO.

According to a fifth aspect, a method for deploying a virtualized network function is provided. The method may be performed by a first network element, or may be performed by a chip or a circuit configured in a first network element. This is not limited in this application.

The method may include: The first network element sends first information to a container as a service CaaS manager, where the first information includes information related to a user-defined scheduling policy, and the user-defined scheduling policy is information about a personalized requirement of a deployment unit of a first VNF on a to-be-deployed-on node. The first network element receives a first message sent by the CaaS manager, where the first message indicates that setting of the user-defined scheduling policy is completed. The first network element sends a first request message to the CaaS manager, where the first request message is used to request to deploy the deployment unit of the first VNF according to the user-defined scheduling policy. The first network element receives a first request response message from the CaaS manager, where the first request response message indicates that the deployment unit of the first VNF is successfully deployed.

In the foregoing technical solution, an intervention method for more flexible container deployment/scheduling may be provided by using the user-defined scheduling policy, so that a product with a high requirement for deployment customization may no longer be limited to a VNFD template, and a requirement for more widespread deployment and scheduling may be met in a containerization scenario.

With reference to the fifth aspect, in some implementations of the fifth aspect, the information related to the user-defined scheduling policy includes: information about a file in which the user-defined scheduling policy is located, and definitions of an input parameter and an output parameter that are required for the user-defined scheduling policy.

With reference to the fifth aspect, in some implementations of the fifth aspect, the information related to the user-defined scheduling policy includes: an effective period of the user-defined scheduling policy.

With reference to the fifth aspect, in some implementations of the fifth aspect, the input parameter includes at least one of the following: a remaining resource of a first node, a deployment unit that has been deployed on the first node, and label information of the first node. The first node is a candidate node that is in a resource pool and that may be used to deploy the deployment unit of the first VNF, the output parameter includes a matching degree of the first node, and the matching degree is determined based on a value of the input parameter and the user-defined scheduling policy.

With reference to the fifth aspect, in some implementations of the fifth aspect, the method further includes: The first network element sends a first VNFD template to the CaaS manager, where the first VNFD template is a containerized deployment template of the first VNF, and the first VNFD template includes the first information.

With reference to the fifth aspect, in some implementations of the fifth aspect, the first network element is a virtualized network function manager VNFM or a network functions virtualization orchestrator NFVO.

According to a sixth aspect, a method for deploying a virtualized network function is provided. The method may be performed by a CaaS manager, or may be performed by a chip or a circuit configured in a CaaS manager. This is not limited in this application.

The method may include: The container as a service CaaS manager receives first information from a first network element, where the first information includes information related to a user-defined scheduling policy, and the user-defined scheduling policy is information about a personalized requirement of a first virtual deployment unit VDU of a first VNF on a to-be-deployed-on node. The CaaS manager sends a first message to the first network element, where the first message indicates that setting of the user-defined scheduling policy is completed. The CaaS manager receives a first request message from the first network element, where the first request message is used to request to deploy a deployment unit of the first VNF according to the user-defined scheduling policy. The CaaS manager deploys the deployment unit of the first VNF on a matched node based on information about the user-defined scheduling policy. The CaaS manager sends a first request response message to the first network element, where the first request response message indicates that the deployment unit of the first VNF is successfully deployed.

For beneficial effect of the sixth aspect, refer to the descriptions of the fifth aspect. Details are not described herein again.

With reference to the sixth aspect, in some implementations of the sixth aspect, the information related to the user-defined scheduling policy includes: information about a file in which the user-defined scheduling policy is located, and definitions of an input parameter and an output parameter that are required for the user-defined scheduling policy.

With reference to the sixth aspect, in some implementations of the sixth aspect, the information related to the user-defined scheduling policy includes: an effective period of the user-defined scheduling policy.

With reference to the sixth aspect, in some implementations of the sixth aspect, the input parameter includes at least one of the following: a remaining resource of a first node, a deployment unit that has been deployed on the first node, and label information of the first node. The first node is a candidate node that is in a resource pool and that may be used to deploy the deployment unit of the first VNF, the output parameter includes a matching degree of the first node, and the matching degree is determined based on a value of the input parameter and the user-defined scheduling policy.

With reference to the sixth aspect, in some implementations of the sixth aspect, that the CaaS manager deploys the deployment unit of the first VNF on a matched node based on information about the user-defined scheduling policy includes: The CaaS manager determines matching degrees of a plurality of candidate nodes that are in the resource pool and that may be used to deploy the deployment unit of the first VNF. The CaaS manager deploys the deployment unit of the first VNF on a node that is in the plurality of candidate nodes and that has the highest matching degree.

With reference to the sixth aspect, in some implementations of the sixth aspect, that the CaaS manager receives first information from a first network element includes: The CaaS manager receives a first VNFD template from the first network element, where the first VNFD template is a containerized deployment template of the first VNF, and the first VNFD template includes the first information.

With reference to the sixth aspect, in some implementations of the sixth aspect, the first network element is a virtualized network function manager VNFM or a network functions virtualization orchestrator NFVO.

According to a seventh aspect, a communication apparatus is provided. The apparatus is configured to perform the method according to the first aspect, the third aspect, or the fifth aspect. Specifically, the apparatus may include a unit and/or a module configured to perform the method according to the first aspect, the third aspect, or the fifth aspect and any possible implementation of the first aspect, the third aspect, or the fifth aspect, for example, a processing unit and/or a communication unit.

In an implementation, the apparatus is a first network element. When the apparatus is the first network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a first network element. When the apparatus is the chip, the chip system, or the circuit used in the first network element, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to an eighth aspect, a communication apparatus is provided. The apparatus is configured to perform the method according to the second aspect, the fourth aspect, or the sixth aspect. Specifically, the apparatus may include a unit and/or a module configured to perform the method according to the second aspect, the fourth aspect, or the sixth aspect and any possible implementation of the second aspect, the fourth aspect, or the sixth aspect, for example, a processing unit and/or a communication unit.

In an implementation, the apparatus is a CaaS manager. When the apparatus is the CaaS manager, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a CaaS manager. When the apparatus is the chip, the chip system, or the circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a ninth aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method according to the first aspect, the third aspect, or the fifth aspect and any possible implementation of the first aspect, the third aspect, or the fifth aspect.

In an implementation, the apparatus is a first network element.

In another implementation, the apparatus is a chip, a chip system, or a circuit used in a first network element.

According to a tenth aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method according to the second aspect, the fourth aspect, or the sixth aspect and any possible implementation of the second aspect, the fourth aspect, or the sixth aspect.

In an implementation, the apparatus is a CaaS manager.

In another implementation, the apparatus is a chip, a chip system, or a circuit used in a CaaS manager.

According to an eleventh aspect, this application provides a processor, configured to perform the methods according to the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions.

According to a twelfth aspect, a computer-readable storage medium is provided. The computer-readable storage medium stores program code to be executed by a device, and the program code is used to perform the method according to the first aspect, the second aspect, the third aspect, the fourth aspect, the fifth aspect, or the sixth aspect and any possible implementation of the first aspect, the second aspect, the third aspect, the fourth aspect, the fifth aspect, or the sixth aspect.

According to a thirteenth aspect, a computer program product including instructions is provided. When the computer program product runs on a computer, the computer is enabled to perform the method according to the first aspect, the second aspect, the third aspect, the fourth aspect, the fifth aspect, or the sixth aspect and any possible implementation of the first aspect, the second aspect, the third aspect, the fourth aspect, the fifth aspect, or the sixth aspect.

According to a fourteenth aspect, a chip is provided. The chip includes a processor and a communication interface. The processor reads, through the communication interface, instructions stored in a memory, to perform the method according to the first aspect, the second aspect, the third aspect, the fourth aspect, the fifth aspect, or the sixth aspect and any possible implementation of the first aspect, the second aspect, the third aspect, the fourth aspect, the fifth aspect, or the sixth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method according to the first aspect, the second aspect, the third aspect, the fourth aspect, the fifth aspect, or the sixth aspect and any possible implementation of the first aspect, the second aspect, the third aspect, the fourth aspect, the fifth aspect, or the sixth aspect.

According to a fifteenth aspect, a communication system is provided. The communication system includes the communication apparatuses shown in the ninth aspect and the tenth aspect.

### BRIEF DESCRIPTION OF DRAWINGS

FIG. 1 is a schematic diagram of an NFV-based network architecture according to an embodiment of this application;
FIG. 2 is a schematic flowchart of a VNF deployment method according to this application;
FIG. 3 is a schematic flowchart of another VNF deployment method according to this application;
FIG. 4 is a schematic diagram of deploying a VNF 1 and a VNF 2 by applying the methods shown in FIG. 2 and FIG. 3 in this application;
FIG. 5 is a schematic diagram of meeting a resource expansion requirement by applying the method shown in FIG. 3 in this application;
FIG. 6 is a schematic diagram of meeting a deployment differentiation requirement by applying the method shown in FIG. 2 in this application;
FIG. 7 is a schematic flowchart of applying a label extension mechanism in a first VNF instantiation process according to this application;
FIG. 8 is a schematic flowchart of applying a label extension mechanism in a first VNF re-adjustment or scale-out process according to this application;
FIG. 9 is a schematic flowchart of still another VNF deployment method according to this application;
FIG. 10 is a schematic flowchart of configuring a label of a plurality of nodes of a same type according to this application;
FIG. 11 is a schematic block diagram of a communication apparatus 100 according to this application; and
FIG. 12 is a schematic diagram of a structure of a communication apparatus 200 according to this application.

### DESCRIPTION OF EMBODIMENTS

The following describes technical solutions of embodiments in this application with reference to accompanying drawings.

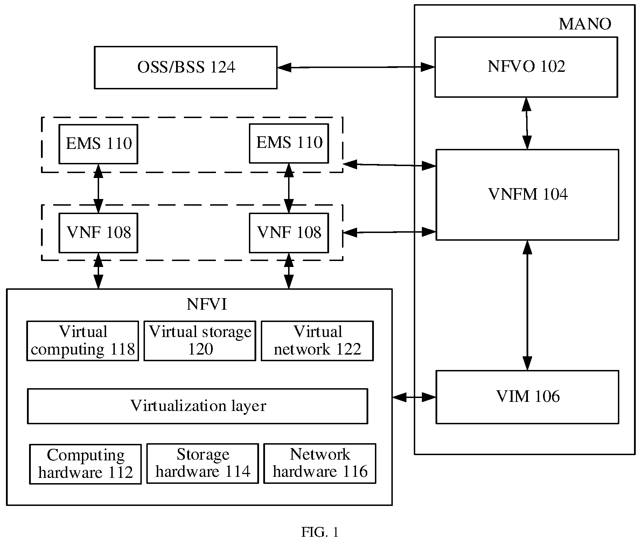

FIG. 1 is a schematic diagram of an NFV-based network architecture according to an embodiment of this application. As shown in FIG. 1, the network architecture includes a network functions virtualization orchestrator (Network Functions Virtualization Orchestrator, NFVO) 102, a virtualized network function manager (Virtualized Network Function Manager, VNFM) 104, a virtualized infrastructure manager (Virtualized Infrastructure Manager, VIM) 106, a network functions virtualization infrastructure (Network Functions Virtualization Infrastructure, NFVI), a virtualized network function (Virtualized Network Function, VNF) 108, and an element management system (Element Manager System, EMS) 110. The NFVO 102, the VNFM 104, and the VIM 106 belong to management and orchestration (Management and Orchestration, MANO) of an NFV system. Related functions of the MANO may be implemented by hardware, and may also be implemented by software. The following briefly describes the foregoing network elements.

The NFVO 102 is configured to: manage a network service descriptor (Network Service Descriptor, NSD), a virtualized network function descriptor (Virtualized Network Function Descriptor, VNFD), and a virtualized network function forwarding graph (Virtualized Network Function Forwarding Graph, VNFFG), perform lifecycle management of a network service (Network Service, NS), and implement a global resource view function. The NFVO 102 is mainly responsible for lifecycle management of a virtualization service, allocation and scheduling of a virtual resource in the NFVI, and the like. The NFVO 102 may communicate with one or more VNFMs 104, to perform a resource-related request and send configuration information to the VNFM 104, and collect status information of the VNF 108. In addition, the NFVO 102 may also communicate with the VIM 106, to perform resource allocation and/or reservation, and exchange virtualized hardware resource configuration and status information.

The VNFM 104 is responsible for lifecycle management of one or more VNFs 108, such as instantiating (instantiating), updating (updating), querying, scaling (scaling), or terminating (terminating) the VNF 108. The VNFM 104 may communicate with the VNF 108 for VNF lifecycle management and exchange of configuration and status information. There may be a plurality of VNFMs 104 in an NFV architecture, and the plurality of VNFMs 104 are responsible for lifecycle management of different types of VNFs.

The VIM 106, that is, a virtualized infrastructure manager, controls and manages interaction between the VNF 108 and computing hardware 112, storage hardware 114, network hardware 116, virtual computing 118, a virtual storage 120, and a virtual network 122. For example, the VIM 106 executes a resource management function, including infrastructure resource management, allocation (for example, adding a resource to a virtual container), and a running function (for example, collecting fault information of the NFVI). The VNFM 104 and the VIM 106 may communicate with each other, to request resource allocation and exchange virtualized hardware resource configuration and status information.

The VNF 108, also referred to as a virtualized network element, corresponds to a physical network function in a conventional non-virtualized network. Functional behavior and a status that are of a network function are irrelevant to whether the network function is virtualized. Universal hardware such as an x86 processor, and a virtualization technology are used to support software processing in implementing many functions, thereby reducing high device costs of a network.

The EMS 110 is a system for configuring and managing a device in a conventional telecommunication system. In an NFV architecture, the EMS 110 may also be used for configuring and managing a VNF, and initiating a lifecycle management operation on a VNFM, for example, instantiating a new VNF.

The NFVI, that is, an NFV infrastructure layer, includes a hardware component, a software component, or a combination thereof, to establish a virtualized environment, and deploy, manage, and implement the VNF 108. A hardware resource and the virtualization layer are used to provide virtualized resources, such as a virtual machine and a virtual container in another form, for the VNF 108. The hardware resource includes the computing (computing) hardware 112, the storage hardware 114, and the network hardware 116. Optionally, resources of the computing hardware 112 and the storage hardware 114 may be centralized. The virtualization layer in the NFVI may abstract the hardware resource, and decouple the VNF 108 from an underlying physical network layer.

The OSS/BSS 124 supports various end-to-end telecommunication services. Management functions supported by the OSS include: network configuration, service provision, fault management, and the like. The BSS processes an order, payment, income, or the like, and supports product management, order management, profit management, and customer management.

For ease of understanding of this application, before a method provided in this application is described, concepts and technologies in this application are briefly described first.
1. Cloud computing (cloud computing) is an internet-based new computing method that provides on-demand computing for individual users and business users by using heterogeneous and autonomous services on the internet. The cloud computing includes three layers of services: infrastructure as a service (IaaS), platform as a service (platform as a service, PaaS), and software as a service (software as a service, SaaS). PaaS is a business model in which a server platform is provided as a service, and actually means that a software development and research platform is provided as a service to a user in a SaaS mode.
2. A container (container) is an operating system-level virtualization technology that isolates different processes by using an operating system isolation technology. The technology is used to bundle an application and all necessary files of the application into a runtime environment. As a unit, the container may be easily moved and run on any operating system in any environment.
3. A container as a service (container as a service, CaaS) is a specific type of PaaS.
4. Kubernetes (K8S) is a container cluster management system open-sourced by Google (Google). The system is built on a docker technology and provides a complete set of functions, such as resource scheduling, deployment and running, service discovery, and scale-in/-out, for containerized applications. In other words, K8S is a cluster responsible for automatic operations and maintenance management of a plurality of docker programs. Kubernetes may be regarded as a container technology-based mini-CaaS (mini-CaaS) manager.
5. A virtual machine (virtual machine, VM) container is a containerized system deployed based on a virtual machine, including a virtualized infrastructure, a containerized management platform, and a network element VNF.
6. A bare metal (bare metal) container is a containerized system deployed on a bare metal server, including a bare metal infrastructure, a containerized management platform, and a network element VNF.
7. A host aggregate (host aggregate, HA) is a logical concept in an OpenStack deployment model, and represents a group of computing boards (host) and related metadata. Generally, a group of boards with a same architecture (such as x86 or ARM) and a homogeneous specification (such as 2*32 cores or 2*64 cores) are planned in an HA resource pool. In this application, the board may also be understood as a host (host), and the board and the host may be replaced with each other in this application.
8. A node (Node) is a worker node used to deploy an application or a service. The node may be a virtual machine VM or a bare metal host. A K8S node is the VM in a virtual machine container scenario and is the host in a bare metal container scenario. It may be understood that, when this embodiment is applied to another container management platform or system, the node may be understood as a worker node in a corresponding platform or system. This is not limited herein.
9. A point of deployment (Pod) is a smallest or simplest basic unit created or deployed in K8S. The Pod corresponds to an application instance and is deployed on a node. The Pod may include one or a group of containers that share a resource. A relationship among an HA, a node, and a Pod is as follows: The HA may include a plurality of nodes, and a plurality of Pods may be deployed on one node.
10. A K8S template is a containerized deployment template file corresponding to a Kubernetes community.
11. A VNFD template is a template file used to deploy a VNF. The VNFD template can reference a containerized deployment expansion template, for example, a K8S template and a Helm template.
   The VNFD template includes VNF information and VNF deployment unit information. The VNF information may also be understood as a VNF attribute, for example, a VNF type. The VNF deployment unit information may be understood as a VNF deployment unit attribute, for example, a quantity of deployment units and an attribute requirement of a deployment unit on a to-be-deployed-on node (or a label requirement a deployment unit on a to-be-deployed-on node).
12. A virtual deployment unit (virtual deployment unit, VDU) is based on a VNFD template. In a virtual machine scenario, a "VDU object" refers to a VM. In a container scenario, a "VDU object" may refer to a Pod. Further, when the VDU is a Pod, a parameter in the VNFD template may indicate whether the VDU is a virtual machine container or a bare metal container.
   It should be understood that the VDU is a deployment unit of a VNF, and a process of instantiating the VNF is to deploy one or more deployment units of the VNF on a corresponding node. A type of the deployment unit of the VNF is not limited in embodiments of this application.
13. A containerized deployment expansion template is a containerized deployment template other than a K8S template provided by a community or a device vendor, for example, a Helm template or a TOSCA template. Compared with the K8S template, the expansion template provides some customized enhanced functions. A CaaS manager used by a common device vendor generally supports use of the expansion template.
14. A label (label) is also referred to as a node label and is used to describe a node attribute. The node label includes, for example, a key/value pair (KEY/VALUE) attached to a node.

For ease of understanding of embodiments of this application, the following describes a containerized deployment process of a VNF.

A possible specific VNF deployment process is shown as follows:
Step 1: Create a node and configure a node label by using a containerized deployment platform.
   In a virtual machine container scenario, a Pod scheduling object VM dynamically creates the node and configures the label as the VNF runs. In a bare metal container scenario, a Pod scheduling object host plans in advance and configures the label.
Step 2: Use a containerized deployment template in a VNFD to describe a quantity of Pods that need to be deployed and a label requirement of each Pod on a to-be-deployed-on node.
Step 3: A CaaS manager schedules the Pod to a matched node based on the label requirement of each Pod on the to-be-deployed-on node.

For example, a label requirement of a Pod with a name (name) of nginx on a to-be-deployed-on node is described in the following containerized deployment template in the VNFD:
apiVersion: v1
kind: Pod
metadata:
   name: nginx
spec: affinity:
   nodeAffinity:
      requiredDuringSchedulingIgnoredDuringExecution:
      nodeSelectorTerms:
      - matchExpressions:
         - key1: disktype
            operator: In
            values:
               - ssd
                  - normal
               - key2: mem
            operator: In
            values:
               - 2M
                  - mem
   containers:
      - name: nginx
         image: nginx
         imagePullPolicy: IfNotPresent

It can be learned that in the foregoing template, the Pod with the name of nginx needs to be scheduled to a node that meets a match expression (match expression). The match expression includes two labels, each label corresponds to a key/value pair, and the two key/value pairs are respectively a key/value pair key1/value and a key/value pair key2/value.

It should be understood that a quantity of values of VALUE in each key/value pair in the foregoing template is fixed. For ease of description, if VALUE in a key/value pair has N values, it may be understood in this application that the key/value pair corresponds to N VALUE, and each VALUE corresponds to only one value. For example, a value of KEY key1 in the key/value pair key1/value is disktype, and the key/value pair key1/value includes two values VALUE, where a value of one VALUE is ssd, and a value of the other VALUE is normal. A value of KEY key2 in the key/value pair key2/value is mem, and the key/value pair key2/value includes two values VALUE, where a value of one VALUE is 2M, and a value of the other VALUE is mem.

The node that meets the match expression has the following characteristics:
1. On the node, there are both a label whose KEY has a value of disktype and a label whose KEY has a value of mem.
2. On the node, a value of VALUE corresponding to a label whose KEY has a value of disktype is either of {ssd, normal}.
3. On the node, a value of VALUE corresponding to a label whose KEY has a value of mem is either of {2M, mem}.

In a containerization scenario, given a requirement of an existing Pod on a to-be-deployed-on node and a node label matching mechanism, and because a manner in which the template expresses the label requirement of the Pod on the node label is fixed, a requirement for more widespread deployment and scheduling cannot be met. Similarly, this problem also exists in a VDU (that is, VM) deployment process in a non-containerization scenario, and a deployment process of another deployment unit of the VNF.

In view of this, this application provides a method for deploying a virtualized network function, to effectively resolve the foregoing technical problem.

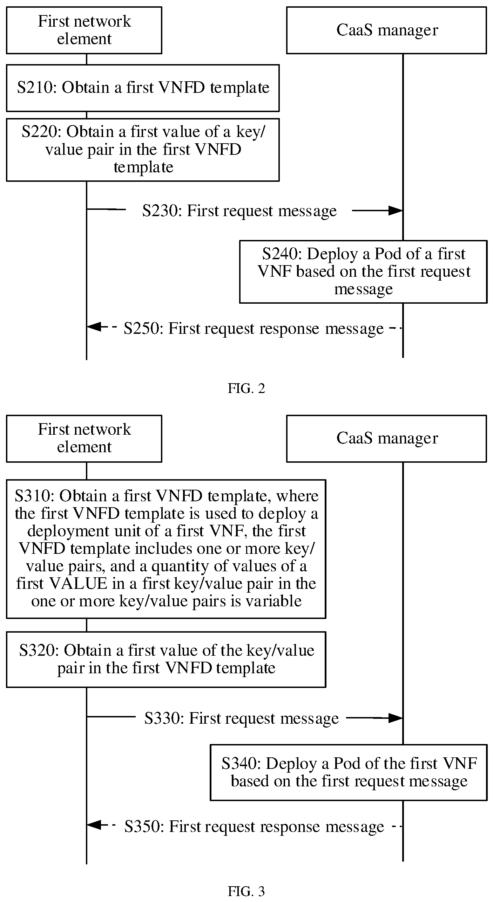

FIG. 2 is a schematic flowchart of a VNF deployment method according to this application. The method may include the following steps.

S210: A first network element obtains a first VNFD template.

The first VNFD template is used to deploy a deployment unit of a first VNF. To be specific, the first VNFD template is used to deploy the deployment unit of the first VNF on a corresponding matched node. For details, refer to content in S240. The deploying herein may refer to deploying the deployment unit of the first VNF to the corresponding node when the first VNF is instantiated for the first time, or may refer to adding new deployment units to the first VNF after the first VNF has instantiated one or more deployment units, and deploying the new deployment units to the corresponding matched node by using the first VNFD template, that is, scaling out the first VNF, or may refer to changing, after the first VNF is instantiated, the node on which the deployment unit of the first VNF is deployed, that is, re-deploying the first VNF. Deploying the deployment unit of the first VNF may also be understood as deploying the first VNF.

Specifically, a VNFD template specifically includes a name of an attribute and a value of the attribute. The name of the attribute and the value of the attribute may be understood as a key/value pair. A value of a key (KEY) in the key/value pair is the name of the attribute, and a value of a value (VALUE) in the key/value pair is the value of the attribute. In other words, the VNFD template may include one or more key/value pairs. The value of the key KEY in the key/value pair may indicate an attribute of a Pod that is of a VNF and that is to be deployed, and the value of the value VALUE in the key/value pair indicates a specific value of the attribute. For example, in the VNFD template that includes the key/value pair key1/value and the key/value pair key2/value in the foregoing example, an attribute requirement of the deployment unit of the VNF on a to-be-deployed-on node includes a first attribute and a second attribute, where the first attribute is disktype:ssd or disktype:normal (that is, a value of the key/value pair key1/value), and the second attribute is mem:2M or mem:mem (that is, a value of the key/value pair key2/value). A specific manner (for example, a data structure) of implementing the foregoing key/value pair is not limited in this embodiment of this application.

Optionally, the VNFD template may not include a specific value of the key/value pair, or the VNFD template may include an initial value or a default value of the key/value pair. When the first VNF is deployed, the first network element may obtain an actual value of the VNFD template or update the initial value in the VNFD template in different manners. For details, refer to step S220. Specifically, the first network element may obtain a plurality of VNFD templates, including the first VNFD template. After obtaining a requirement for deploying the first VNF, the first network element selects the first VNFD template to deploy the first VNF.

Optionally, the first network element is a VNFM or an NFVO. It should be noted that, when the first network element is the NFVO, the NFVO needs to send obtained information to the VNFM, and then the VNFM sends the obtained information to a CaaS manager. A network element that actually interacts with the CaaS manager is the VNFM.

In this embodiment, an example in which the deployment unit is a Pod is subsequently used to describe the solution. It may be understood that when the deployment unit is a VM or a VDU in another form, this solution is still applicable.

S220: The first network element obtains a first value of the key/value pair in the first VNFD template.

In this embodiment, the key/value pair in the first VNFD template includes a plurality of key/value pairs, where the plurality of key/value pairs include a first key/value pair, the first value that is of the key/value pair and that is obtained by the first network element includes a value of the first key/value pair, and the value of the first key/value pair indicates that the first key/value pair does not function on deployment of the Pod of the first VNF. That the first key/value pair does not function on deployment of the Pod of the first VNF may also be understood as that the first key/value pair in the first VNFD template is ignored when the to-be-deployed-on node is matched for the Pod of the first VNF.

Optionally, the value of the first key/value pair may be a value of a key KEY in the first key/value pair or a value of a value VALUE in the first key/value pair. For example, the value of the first key/value pair may be expressed in a plurality of forms, for example, including but not limited to "NONE", "NULL", or "NA". This value may be understood as an invalid value or a null value.

It should be noted that when a key/value pair includes a plurality of values VALUE, and a value of one of the plurality of values VALUE is NONE, it indicates that the key/value pair does not function on the deployment of the Pod of the first VNF.

It may be understood that when the first network element obtains values of the plurality of key/value pairs that are in the first VNFD template and that include the first key/value pair, the first value is a null value of the first key/value pair and an actual value of another key/value pair; or when the first network element obtains only the null value of the first key/value pair, the first value is the null value. The value herein may be understood as the value of the key KEY and/or the value VALUE in the key/value pair. Optionally, if the first network element does not obtain values of some key/value pairs in the first VNFD template, initial values or default values are used as the values of the key/value pairs.

Optionally, an operator enters the first value on a deployment window of the first network element, and the first network element obtains the first value.

For example, the first VNFD template includes two key/value pairs, the value of the first key/value pair is key1:value1-1, and a value of a second key/value pair is key2:value2-1. If the to-be-deployed-on node is matched for the Pod of the first VNF based on values of the two key/value pairs in the first VNFD template, the to-be-deployed-on node needs to match the values of the two key/value pairs. If an obtained value of the key KEY in the first key/value pair is NONE, or an obtained value of the value VALUE in the first key/value pair is NONE, it indicates that the first key/value pair in the first VNFD template is ignored when the to-be-deployed-on node is matched for the Pod of the first VNF, provided that a label of the to-be-deployed-on node matches the second key/value pair.

It may be understood that a manner in which the current VNFD template expresses a label requirement of a Pod on a node is fixed. To be specific, in the VNFD template, a quantity of key/value pairs in a match expression (match expression) of a Pod is fixed, and each key/value pair needs to match the label of the to-be-deployed-on node of the Pod. In this case, the Pod can be scheduled to the node; otherwise, the Pod cannot be scheduled to the node. In the foregoing example, in the label requirement of the Pod with the name (name) of nginx, the Pod corresponds to two keys, and the key/value pairs corresponding to the two keys needs to be matched so that the Pod can be scheduled to the corresponding node. When only one template is published, the following situation cannot be implemented: either a key/value pair corresponding to disktype or a key/value pair corresponding to mem is validated when one VNF is deployed, and both the key/value pair corresponding to disktype and the key/value pair corresponding to mem are validated when another VNF is deployed. However, to control whether a key/value pair is validated based on whether a value of the key/value pair is null, that all key/value pairs described in the VNFD template need to be actually matched is no longer a requirement. In other words, although the quantity of key/value pairs in the VNFD template is fixed, a quantity of key/value pairs actually engaged in matching and scheduling may be flexibly controlled by controlling whether an actual value of the key/value pair is null.

S230: The first network element sends a first request message to the CaaS manager based on the first VNFD template and the first value. Correspondingly, the CaaS manager receives the first request message from the first network element. Correspondingly, the CaaS manager receives the first request message from the first network element.

The first request message is used to request to deploy the Pod of the first VNF on a node that meets the first VNFD template and the first value of the key/value pair in the template.

Optionally, the first request message includes the first VNFD template and the first value; or the first request includes an index of the first VNFD template and the first value, and the CaaS manager may obtain the first VNFD template based on the index.

S240: The CaaS manager deploys the Pod of the first VNF based on the first request message.

Specifically, the label of the node on which the Pod is deployed needs to match the value of the key/value pair in the first VNFD template. For details, refer to content of the foregoing example, for example, the foregoing containerized deployment process of the VNF. Details are not described herein again.

Particularly, the CaaS manager learns, via the value of the first key/value pair, that the first key/value pair does not function on the deployment of the Pod of the first VNF. Therefore, when selecting a node, the CaaS manager considers only a key/value pair other than the first key/value pair in the first VNFD template, in other words, selects a node whose label matches a value of another key/value pair in the first VNFD template, without considering whether the node label matches the value of the first key/value pair.

Optionally, S250: The CaaS manager sends a first request response message to the first network element, where the first request response message indicates that the Pod of the first VNF is successfully deployed. Correspondingly, the first network element receives the first request response message sent by the CaaS manager.

In the foregoing technical solution, whether the key/value pair is validated may be controlled via the value of the key/value pair in the VNFD template. This mechanism can meet a requirement for deployment at different sites based on one template, so that publishing of the template is simpler and more adaptive.

Optionally, the first request message may be used to instantiate (or deploy for the first time) the first VNF, and correspondingly, after receiving the first request message, the CaaS manager selects a corresponding node for the first VNF to deploy the Pod of the first VNF. Alternatively, the first request message is used to re-deploy the first VNF, and correspondingly, after receiving the first request message, the CaaS manager re-selects a corresponding node for the first VNF to deploy the Pod of the first VNF. Alternatively, the first request message is used to scale out the first VNF, and correspondingly, after receiving the first request message, the CaaS manager matches, for the first VNF, a node that meets a condition, to deploy a scaled-out first VNF. It may be understood that scale-out deployment refers to deploying more Pods of the first VNF. For example, 10 Pods have been instantiated and deployed in the first VNF, and subsequently, based on an actual requirement, the first request message is used to request to deploy 10 more Pods in the first VNF. The CaaS manager deploys, based on the first request message, the 10 more Pods to a node that meets a condition, to implement the scale-out deployment of the first VNF.

It may be understood that, when the first request message is used to request to scale out or re-deploy the first VNF, before S220, a Pod that belongs to the first VNF has been deployed on a corresponding node, in other words, before S220, the following process is further included:
S2201: The first network element obtains a second value of the key/value pair in the first VNFD template, where a value of the first key/value pair in the second value may be different from a value of the first key/value pair in the first value. For example, the value of the first key/value pair in the second value indicates that the first key/value pair functions on the deployment of the deployment unit of the first VNF, in other words, the value of the first key/value pair in the second value is not null, and the value of the first key/value pair needs to match the label of the node on which the Pod of the first VNF is to be deployed. Therefore, a changed deployment requirement of the first VNF is expressed via the first value.
S2202: The first network element sends a second request message to the CaaS manager based on the first VNFD template and the second value. The second request message is used to request to deploy the Pod of the first VNF on a node that meets the first VNFD template and the second value of the key/value pair in the template. Correspondingly, the CaaS manager receives the second request message from the first network element.
S2203: The CaaS manager deploys the Pod of the first VNF on the node that meets the first VNFD template and the second value. Optionally, the CaaS manager sends a second request response message to the first network element, where the second request response message indicates that the Pod of the first VNF is successfully deployed.

For details of the foregoing process, refer to the foregoing specific descriptions of S220 to S250. Particularly, the second value may include a null value of one or more key/value pairs, or may not include a null value of any key/value pair (in other words, the second value includes all values that need to function on the deployment of the Pod of the first VNF). When the second value does not include a null value of any key/value pair, for details of the foregoing process, refer to an existing deployment process of the Pod of the VNF.

In the foregoing technical solution, after the VNF is deployed for the first time, when a VNF deployment requirement changes, for example, scale-out or re-deployment is needed, based on the foregoing solution, a VNFD template used when the VNF is deployed for the first time may still be used, and whether the key/value pair is validated is controlled by controlling the value of the key/value pair in the VNFD template, thereby introducing more attribute restrictions or reducing attribute restrictions when selecting a to-be-deployed-on node. In this way, a changing deployment requirement is met by changing the to-be-deployed-on node or adding a new to-be-deployed-on node.

Optionally, the first request message may include a third VNFD template and a third value of one or more key/value pairs in the third VNFD template. To be specific, after obtaining the first VNFD template and the first value, the first network element learns, based on the value of the first key/value pair, that the first key/value pair does not function on the deployment of the Pod of the first VNF. Then, the first network element does not transfer the first key/value pair to the CaaS manager, but transfers, to the CaaS manager, information other than the first key/value pair in the first VNFD template and a value other than the value of the first key/value pair in the first value. The information other than the first key/value pair in the first VNFD template is referred to as the third VNFD template in this embodiment of this application. In other words, the third VNFD template is the first VNFD template and does not include the first key/value pair. The value other than the value of the first key/value pair in the first value is referred to as the third value in this embodiment of this application. In other words, the third value is the first value and does not include the value of the first key/value pair. For example, the first VNFD template includes the first key/value pair and the second key/value pair, and the first value includes a value of the first key/value pair key1:NONE and a value of the second key/value pair value2-1, which may be understood as that the third VNFD template includes the second key/value pair but does not include the first key/value pair, and correspondingly, the third value includes the value of the second key/value pair but does not include the value of the first key/value pair, in other words, the third value is the value of the second key/value pair key2:value2-1.

When the first request message includes the third VNFD template and the third value, S240 may be replaced with the following: The CaaS manager deploys the Pod of the first VNF on a node that meets the third VNFD template and the third value. It may be understood that, different from the original step S240, in this case, the CaaS manager does not need to identify which key/value pairs are those whose values are null, in other words, the CaaS manager only needs to use an existing node selection solution in a conventional technology.

In the foregoing technical solution, whether the key/value pair is validated may be controlled via the value of the key/value pair in the VNFD template. After identifying a key/value pair whose value is null, the first network element does not transfer the key/value pair and the value of the key/value pair to the CaaS manager, so that the CaaS manager does not obtain information about the key/value pair, and does not introduce an attribute requirement of the key/value pair on a node when selecting a to-be-deployed-on node. This mechanism can meet a requirement for deployment at different sites based on one template, so that publishing of the template is simpler and more adaptive.

FIG. 3 is a schematic flowchart of another VNF deployment method according to this application. The method may include the following steps.

S310: A first network element obtains a first VNFD template. The first VNFD template is used to deploy a deployment unit of a first VNF, the first VNFD template includes one or more key/value pairs, and a quantity of values of first VALUE in a first key/value pair in the one or more key/value pairs is variable.

That a quantity of values of first VALUE is variable may be understood as that the quantity of the values of first VALUE may be changed according to an actual requirement.

Optionally, when first VALUE has a plurality of values, two adjacent values in the plurality of values are connected by using a first character. For example, the first character includes but is not limited to "I", ";", or the like.

It may be understood that the existing template requires that a quantity of values of VALUE in each key/value pair is fixed, to be specific, the quantity of the values of VALUE in each key/value pair is fixed at 1. For example, in the label requirement of the Pod with the name (name) of nginx on the to-be-deployed-on node in the foregoing example, the label of the to-be-deployed-on node of the Pod needs to match the value of a first key/value pair key1/value and the value of a second key/value pair key2/value. Each key/value pair includes two VALUE, and each VALUE can have only one value. In other words, a quantity of values corresponding to one VALUE in the existing template cannot be flexibly increased. In this case, for example, when only one VNFD template is published, values of the two VALUE in the first key/value pair cannot be updated to {2M, 1G, mem} when quantities of the values of the two VALUE in the first key/value pair are both 1. In other words, the quantity of the values of VALUE in the first key/value pair cannot be changed from 2 to 3. However, according to the method provided in this application, the values of the two VALUE in the first key/value pair may be updated to {2M, 1G, mem}. For example, a value of the 1^{st} VALUE in the second key/value pair key2/value is updated to {2M, 1G}, and a value of the 2^{nd} VALUE remains unchanged (that is, remains men); or a value of the 1^{st} VALUE in the second key/value pair key2/value remains unchanged (that is, remains 2M), and a value of the 2^{nd} VALUE is updated to {1G, mem}; or a value of the 1^{st} VALUE in the second key/value pair key2/value is updated to {2M, mem}, and a value of the 2^{nd} VALUE is updated to {1G}. An implementation is not limited in this application, and details are not described herein again. It can be learned that, in the method, a quantity of VALUE in the first key/value pair in the VNFD template does not increase, but a quantity of values of VALUE may increase according to an actual requirement. Same as the descriptions in S210, the first VNFD template is used to deploy the deployment unit of the first VNF, to be specific, the first VNFD template is used to deploy the deployment unit of the first VNF on a corresponding matched node. The deploying herein may refer to deploying the deployment unit of the first VNF to the corresponding node when the first VNF is instantiated for the first time, or may refer to adding new deployment units to the first VNF after the first VNF has instantiated one or more deployment units, and deploying the new deployment units to more corresponding matched nodes by using the first VNFD template, that is, scaling out the first VNF, or may refer to changing, after the first VNF is instantiated, the node on which the deployment unit of the first VNF is deployed, that is, re-deploying the first VNF. Deploying the deployment unit of the first VNF may also be understood as deploying the first VNF.

Specifically, one VNFD template includes one or more key/value pairs, a value of a key KEY in one key/value pair indicates an attribute of a Pod that is of a VNF and that is to be deployed, and a value of a value VALUE in the key/value pair indicates a specific value of the attribute. For example, in the VNFD template that includes the key/value pair key1/value and the key/value pair key2/value in the foregoing example, an attribute requirement of the deployment unit of the VNF on a to-be-deployed-on node includes a first attribute and a second attribute, where the first attribute is disktype:ssd or disktype:normal (that is, a value of the key/value pair key1/value), and the second attribute is mem:2M or mem:mem (that is, a value of the key/value pair key2/value). A specific manner (for example, a data structure) of implementing the foregoing key/value pair is not limited in this embodiment of this application.

Optionally, the VNFD template may not include a specific value of the key/value pair, or the VNFD template may include an initial value or a default value of the key/value pair. When the first VNF is deployed, the first network element may obtain an actual value of the VNFD template or update the initial value in the VNFD template in different manners. For details, refer to step S320. Specifically, the first network element may obtain a plurality of VNFD templates, including the first VNFD template. After obtaining a requirement for deploying the first VNF, the first network element selects the first VNFD template to deploy the first VNF.

Optionally, the first network element is a VNFM or an NFVO. It should be noted that, when the first network element is the NFVO, the NFVO needs to send obtained information to the VNFM, and then the VNFM sends the obtained information to a CaaS manager. A network element that actually interacts with the CaaS manager is the VNFM.

In this embodiment, an example in which the deployment unit is a Pod is subsequently used to describe the solution. It may be understood that when the deployment unit is a VM or a VDU in another form, this solution is still applicable.

S320: The first network element obtains a first value of the key/value pair in the first VNFD template.

The first value includes a first value set including a value of first VALUE, the first value set includes N values, and N is a positive integer.

It may be understood that when the first network element obtains values of a plurality of key/value pairs that are in the first VNFD template and that include the first key/value pair, the first value is the first value set and an actual value of another key/value pair; or when the first network element obtains only the value of first VALUE in the first key/value pair, the first value is the first value set. The value herein may be understood as the value of the key KEY and/or the value VALUE in the key/value pair. Optionally, if the first network element does not obtain values of KEY or VALUE in some key/value pairs in the first VNFD template, initial values or default values are used as the values.

Optionally, an operator enters the first value on a deployment window of the first network element, and the first network element obtains the first value.

S330: The first network element sends a first request message to the CaaS manager based on the first VNFD template and the first value. Correspondingly, the CaaS manager receives the first request message from the first network element. Correspondingly, the CaaS manager receives the first request message from the first network element.

The first request message is used to request to deploy the Pod of the first VNF on a node that meets the first VNFD template and the first value of the key/value pair in the template.

Optionally, the first request message includes the first VNFD template and the first value; or the first request includes an index of the first VNFD template and the first value, and the CaaS manager may obtain the first VNFD template based on the index.

S340: The CaaS manager deploys the Pod of the first VNF based on the first request message.

Specifically, the label of the node on which the Pod is deployed needs to match the value of the key/value pair in the first VNFD template. For details, refer to content of the foregoing example, for example, the foregoing containerized deployment process of the VNF. Details are not described herein again.

It should be understood that, if the value of first VALUE in the first key/value pair includes a plurality of values, a plurality of groups of key/value pair values are generated in the first key/value pair. During node matching, only one of the plurality of groups of key/value pair values needs to match the label of the to-be-deployed-on node. For example, if a value of KEY in the first key/value pair is mem, VALUE in the first key/value pair includes only one first VALUE, and the value of first VALUE is {2M, 1G, mem}, three groups of key/value pair values, that is, mem:2M, mem: 1G, and mem:mem, are generated in the first key/value pair. During actual matching, for the key/value pair, only one of the three groups of key/value pair values needs to match the label of the to-be-deployed-on node.

Optionally, S350: The CaaS manager sends a first request response message to the first network element, where the first request response message indicates that the Pod of the first VNF is successfully deployed. Correspondingly, the first network element receives the first request response message sent by the CaaS manager.

In the foregoing technical solution, one VALUE in one key/value pair may have a plurality of values. This method may meet a requirement for flexible cross-resource-pool expansion. An expansion adjustment manner may minimize service interruption, and a resource pool expansion manner does not affect planning of an existing resource pool.

Optionally, the first request message may be used to instantiate (or deploy for the first time) the first VNF, and correspondingly, after receiving the first request message, the CaaS manager selects a corresponding node for the first VNF to deploy the Pod of the first VNF. Alternatively, the first request message is used to re-deploy the first VNF, and correspondingly, after receiving the first request message, the CaaS manager re-selects a corresponding node for the first VNF to deploy the Pod of the first VNF. Alternatively, the first request message is used to scale out the first VNF, and correspondingly, after receiving the first request message, the CaaS manager matches, for the first VNF, a node that meets a condition, to deploy a scaled-out first VNF.

It may be understood that, when the first request message is used to request to scale out or re-deploy the first VNF, before S320, a Pod that belongs to the first VNF has been deployed on a corresponding node, in other words, before S320, the following process is further included:
S3201: The first network element obtains a second value of the key/value pair in the first VNFD template, where the second value includes a second value set including the value of first VALUE in the first key/value pair, the second value set includes M values, M is a positive integer, and M is different from a quantity N of values in the first value set.

In an example, before a request to re-deploy the first VNF is initiated, a value set of first VALUE in the first key/value pair in the first VNFD template is {value1-1, value1-2} (that is, an example in the second value set). Then, due to a re-deployment requirement, a new value value1-3 needs to be added to the original value set of first VALUE, in other words, an updated value set of first VALUE is {value1-1, value1-2, value1-3} (that is, an example in the second value set).

S3202: The first network element sends a second request message to the CaaS manager based on the first VNFD template and the second value. The second request message is used to request to deploy the Pod of the first VNF on a node that meets the first VNFD template and the second value of the key/value pair in the template. Correspondingly, the CaaS manager receives the second request message from the first network element.

S3203: The CaaS manager deploys the Pod of the first VNF on the node that meets the first VNFD template and the second value.

Optionally, the CaaS manager sends a second request response message to the first network element, where the second request response message indicates that the Pod of the first VNF is successfully deployed.

For details of the foregoing process, refer to the foregoing specific descriptions of S320 to S350.

In the foregoing technical solution, after a VNF is deployed for the first time, when a VNF deployment requirement changes, for example, scale-out or re-deployment is needed, based on the foregoing solution, a VNFD template used when the VNF is deployed for the first time may still be used. A range of a deployment node that the Pod can select may be expanded by updating a quantity of values of a value in the key/value pair in the VNFD template, thereby meeting the requirement for flexible cross-resource-pool expansion. An expansion adjustment manner may minimize service interruption, and a resource pool expansion manner does not affect planning of an existing resource pool. In this way, a changing deployment requirement is met.

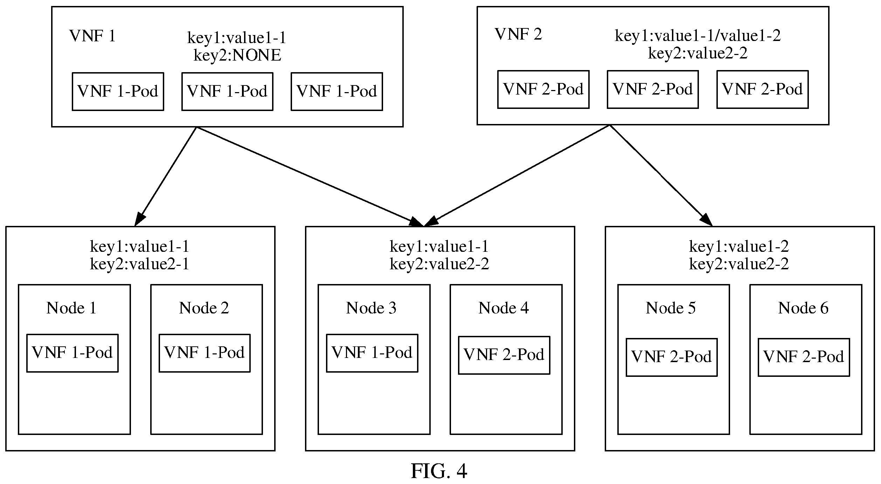

With reference to FIG. 4, the following uses an example to describe how to deploy a VNF 1 and a VNF 2 by using the methods shown in FIG. 2 and FIG. 3.

The VNF 1 and the VNF 2 are two different instances of VNFs of a same type. The VNF 1 and the VNF 2 are instantiated and deployed by using a same VNFD template. A deployment requirement (that is, values of two key/value pairs in the VNFD template) of three Pods of the VNF 1 are key1:value1-1 and key2:NONE, and a deployment requirement (that is, values of two key/value pairs in the VNFD template) of three Pods of the VNF 2 are key1:valuel-1/value1-2 and key2: value2-2. A label of a node 1 and a label of a node 2 are respectively key1:value1-1 and key2:value2-1. A label of a node 3 and a label of a node 4 are respectively key1:value1-1 and key2:value2-2. A label of a node 5 and a label of a node 6 are respectively key1:value1-2 and key2:value2-2.

When the three Pods of the VNF 1 are deployed, key2:NONE may be ignored, and labels of nodes on which the three Pods of the VNF 1 are to be deployed only need to match key1:value1-1. In this case, the three Pods of the VNF 1 may be respectively deployed on the node 1, the node 2, and the node 3. When the three Pods of the VNF 2 are deployed, nodes not only need to match key2:value2-2, but also need to match either of key1:value1-1 or key1:value1-2 in key1:value1-1/value1-2. In this case, the three Pods of the VNF 2 may be respectively deployed on the node 4, the node 5, and the node 6.

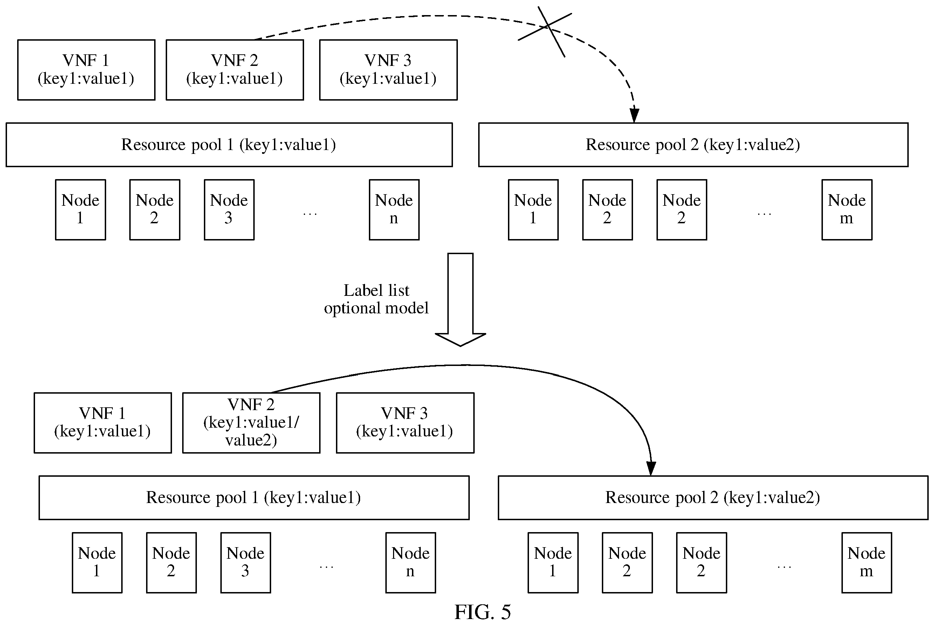

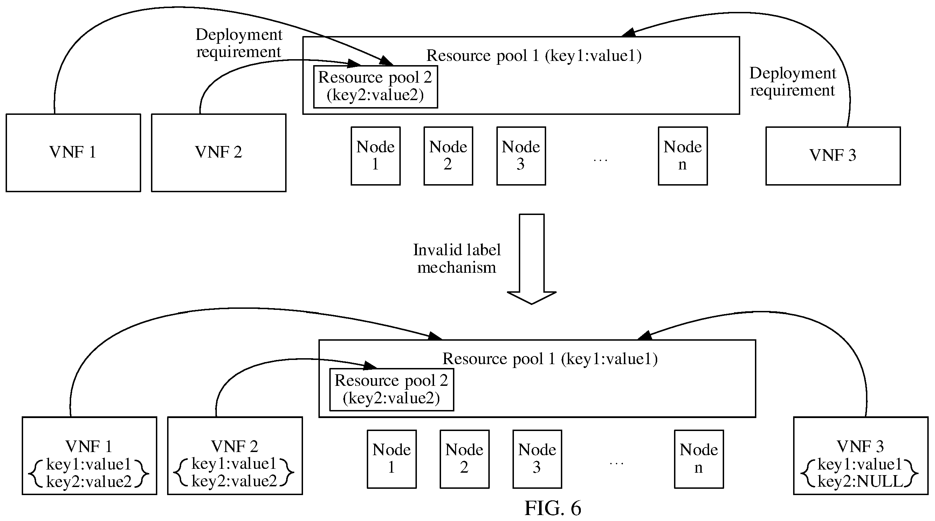

In addition to a basic deployment capability, a resource expansion requirement and a deployment differentiation requirement can further be met by using the methods shown in FIG. 2 and FIG. 3. The following provides specific descriptions with reference to FIG. 5 and FIG. 6.

### (1) Meeting a resource expansion requirement

As shown in FIG. 5, deployment requirements of Pods of a VNF 1, a VNF 2, and a VNF 3 in a VNFD template are all key1:value1, a label of any node in a resource pool 1 is also key1:value1, and a label of any node in a resource pool 2 is key1:value2. Therefore, based on the deployment requirements of the Pods and a node label matching principle, the VNF 1, the VNF 2, and the VNF 3 can be deployed based only on the resource pool 1, and cannot be scheduled to the resource pool 2. If some VNFs (for example, the VNF 2) have a scale-out requirement subsequently, but it is found that an original capacity of the resource pool 1 can no longer meet the VNF scale-out requirement, cross-resource-pool expansion (for example, directly scheduling newly added Pods to the resource pool 2) needs to be considered for the VNFs having the scale-out requirement.

If the foregoing requirement is met by using a conventional technology, the resource pool 1 may need to be expanded again; or the VNF 3 is created to replace a service of the original VNF 2, and then the VNF 2 is uninstalled.

However, based on a label list optional model provided in this application, the foregoing problem can be easily resolved. As shown in FIG. 5, for the VNF 2 subject to the cross-resource-pool expansion, the only thing that needs to be done is to update a value key1:value of a key/value pair corresponding to to-be-deployed Pods in a VNF 2 expansion template from an original value key1:value1 to key1:value1/value2. In this way, a fixed quantity of values of key1 in the template may be changed from 1 to 2. It can be learned that, according to the method shown in FIG. 3, after a value of a value VALUE in the key/value pair is updated, a range of a resource pool that may be used for scheduling of the Pod of the VNF 2 will change from the resource pool 1 to the resource pool 1 and the resource pool 2. In addition, the Pod of the VNF 2 running in the original resource pool 1 always matches the label of the node on which the Pod is located. Therefore, a fault or service interruption does not occur on the Pod that has been successfully deployed in the VNF 2.

### (2) Meeting a deployment differentiation requirement

As shown in FIG. 6, a VNF 1, a VNF 2, and a VNF 3 are three different instances of VNFs of a same type. The VNF 3 is deployed based on an entire resource pool 1, and the VNF 1 and the VNF 2 need to be deployed in a centralized manner in the resource pool 1 as much as possible, for example, deployed in a smaller resource pool 2. A label of any node in the resource pool 1 is key1:value1, and a label of any node in the resource pool 2 is key1:value1 and key2:value2. This deployment manner aims to control deployment ranges of the VNF 1 and the VNF 2, and enable the VNF 3 to share remaining resource fragments in the resource pool 1, thereby improving resource utilization of the resource pool 1.

If the foregoing requirement is met by using a conventional technology, a plurality of site-specific customized VNFD templates may need to be published for a type of VNF. For example, to meet deployment requirements of the VNF 1 and the VNF 2, a VNFD template including two key/value pairs needs to be published (to be specific, a Pod selects a node via values key1:value1 and key2:value2 of the two key/value pairs). To meet a deployment requirement of the VNF 3, another VNFD template including one key/value pair needs to be published (to be specific, a Pod selects a node via a value key1:value1 of the key/value pair).

However, according to the method provided in FIG. 2 in this application, one VNFD template may be used to resolve the foregoing problem. For this type of VNF, a VNFD template including N key/value pairs (N ≥ 2) may be used. Specifically, as shown in FIG. 6, when the VNF 1 and the VNF 2 are deployed, values of two key/value pairs in the N key/value pairs in the template are configured to key1:value1 and key2:value2, and a value of another key/value pair that does not need to be validated is set to an invalid value. In this case, Pods corresponding to the two VNF instances, that is, the VNF 1 and the VNF 2, can be scheduled only in the resource pool 2. When the VNF 3 is deployed, a value of one of the N key/value pairs in the template is set to key1:value1, and a value of another key/value pair that does not need to be validated is set to an invalid value. In this case, Pods of the VNF 3 are allowed to be scheduled in the entire resource pool 1.

It can be learned that in the foregoing operation process, different deployment requirements are always met based on one VNFD template. Therefore, an expanded template has strong adaptability. Theoretically, regardless of how big a deployment difference (a cause may be inconsistent deployment requirements of different VNF instances at a site, inconsistent deployment requirements of different carriers or customers, or the like) between a plurality of instances of this type of VNF is, the deployment requirement can be met, provided that various scenarios are considered in advance, and all possible deployment affecting factors are embedded in the VNFD template via different key/value pairs. When a VNF is instantiated at a specific site, a factor irrelevant to the current deployment is selectively ignored by setting a value of a key/value pair to an invalid value based on the VNFD template. In this way, a VNF instance that meets the deployment requirement can be obtained through instantiation.

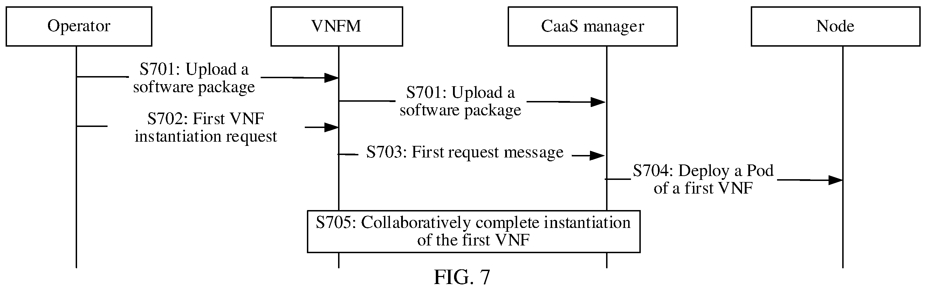

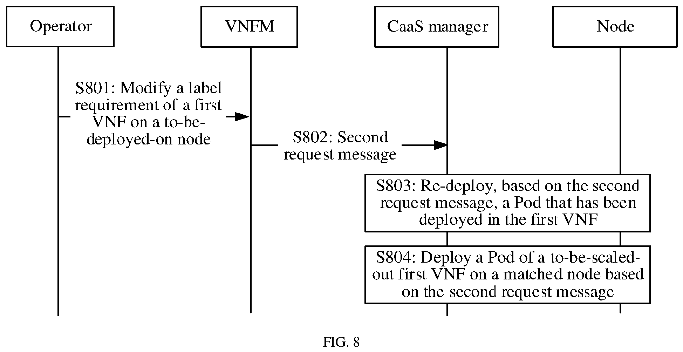

The following describes possible specific implementation processes of the methods shown in FIG. 2 and FIG. 3 with reference to different scenarios. For ease of description, FIG. 7 and FIG. 8 use examples in which a first network element is a VNFM for description.

FIG. 7 is a schematic flowchart of instantiating a first VNF according to this application. The method includes the following steps.

S701: An operator sends, to a CaaS manager by using a VNFM deployment window, a VNF software package required for instantiating the first VNF.

The software package includes a container image file and a VNFD template. The VNFD template included in the software package in this application may be understood as an original VNFD template set before delivery. Optionally, the VNFD template may not include a specific value of a key/value pair, or the VNFD template may include an initial value or a default value of a key/value pair.

S702: The operator triggers a first VNF instantiation request by using the VNFM deployment window.

It should be understood that, in a process of triggering first VNF instantiation, the software package uploaded in the foregoing step needs to be used. During actual deployment of the first VNF, a quantity of instances actually required by Pods of the first VNF and actual label requirements that are of the Pods and that are on to-be-deployed-on nodes may be specified based on a deployment site and an actual situation of network design planning.

Specifically, the operator enters, on the VNFM deployment window based on the original VNFD template, a value of an input (input) parameter given in the template, and obtains an actual deployment template of the first VNF. The actual deployment template of the first VNF can express a quantity of Pod instances that need to be deployed in the first VNF and the label requirements that are of the Pods and that are on the to-be-deployed-on nodes. It should be understood that the label requirements that are of the Pods and that are on the to-be-deployed-on nodes are expressed via values of key/value pairs in the VNFD template. The same part in the following is not described again. For ease of description, the actual deployment template of the first VNF is referred to as a template #1 below.

For example, the operator enters or modifies the value of the input parameter in the VNFD template according to an actual deployment requirement of the first VNF, to indicate that the quantity of the Pod instances of the first VNF is 3, and the label requirements that are of the Pods and that are on the nodes are key1:value1/value3 and key2:NONE (that is, the values of the key/value pairs in the original template). For meanings of the values of the two key/value pairs, refer to the foregoing descriptions. Details are not described herein again.

S703: The VNFM sends a first request message to the CaaS manager, where the first request message is used to request to deploy the Pod in the first VNF on a node that meets a requirement of the template #1. Correspondingly, the CaaS manager receives the first request message from the VNFM.

It should be understood that, when deploying the first VNF, the CaaS manager needs to learn of the label requirement of the Pod on the node. Therefore, the VNFM needs to transfer information about the label requirement of the Pod on the node to the CaaS manager.

Optionally, the first request message includes the template #1.

Optionally, the first request message includes an index of the original template and a value of a related parameter in the template #1.

Optionally, when a value of a key/value pair in the template #1 is an invalid value, the first request message includes a new deployment template, and the new deployment template is a template generated after the key/value pair whose value is the invalid value and the invalid value of the key/value pair are removed from the template #1.

S704: The CaaS manager deploys the Pod of the first VNF.

Specifically, the CaaS manager performs one-to-one matching between the values of the key/value pairs in the template and node labels based on the actual deployment template of the first VNF, and schedules the Pod of the first VNF to the node that meets the requirement.

For example, if a value of KEY in a key/value pair in the actual deployment template of the first VNF is an invalid value, the key/value pair is ignored during matching between the Pod of the first VNF and the node. If a value of VALUE in a key/value pair in the actual deployment template of the first VNF is an invalid value, the key/value pair is ignored during matching between the Pod of the first VNF and the node. If a value of VALUE of a key/value pair in the actual deployment template of the first VNF includes a plurality of values, a plurality of groups of key/value pair values are generated in the key/value pair. During node matching, only one of the plurality of groups of key/value pair values needs to match a label of the to-be-deployed-on node.

Optionally, when matching a plurality of nodes that meet the label requirement of the Pod, the CaaS manager may select a node as a target node according to a corresponding policy (for example, random selection or scoring), and schedule the Pod to the target node.

S705: The VNFM collaborates with the CaaS manager to complete instantiation of the first VNF.

Specifically, if the VNFM determines that all Pods in the first VNF are successfully deployed, it is considered that the first VNF is successfully deployed, and it indicates that a container deployment task of the first VNF is fully completed.

Then, the VNFM may display, on the VNFM window to a user, a prompt that the instantiation of the first VNF is completed and a deployment result of the first VNF.

FIG. 8 is a schematic flowchart of re-deploying or scaling out a first VNF according to this application. The method includes the following steps.

It may be understood that the method may be considered as an operation performed after a first VNF is instantiated.

S801: An operator modifies a label requirement of the first VNF on a to-be-deployed-on node by using a VNFM operations and maintenance window.

Modifying a label requirement of the first VNF on a to-be-deployed-on node may also be understood as replacing or modifying a value of one or more key/value pairs in a VNFD template used when the first VNF is instantiated and deployed. For ease of description, a new actual deployment template of the first VNF obtained by modifying the value of the key/value pair is referred herein to as a template #2.

For example, pre-modification label requirements that are of Pods of the first VNF, that are on nodes, and that are in the VNFD template used when the first VNF is instantiated and deployed are key1:value1 and key2:value2. According to an implementation and deployment requirement of the first VNF, values of key/value pairs in the VNFD template may be modified. Modified label requirements that are of the Pods, that are on the nodes, and that are in the VNFD template are key1:value1/value3 and key2:NONE. Meanings of modified values of the key/value pairs are not described herein again.

S802: A VNFM sends a second request message to the CaaS manager, where the second request message is used to request to re-deploy the Pod of the first VNF or scale out the first VNF on a node that meets the template #2. Correspondingly, the CaaS manager receives the second request message from the VNFM.

Optionally, the second request message includes the template #2.

Optionally, the second request message includes an index of the original template corresponding to the template #2 and a value of a related parameter in the template #2.

Optionally, when a value of a key/value pair in the template #2 is an invalid value, the second request message includes a new deployment template, and the new deployment template is a template generated after the key/value pair whose value is the invalid value and the invalid value of the key/value pair are removed from the template #2.

Optionally, when the second request message is used to request to re-deploy the Pod of the first VNF on the node that meets the template #2, the method further includes:
S803: The CaaS manager re-deploys, based on the second request message, the Pod that has been deployed in the first VNF.

For example, if a label of the node on which the Pod of the first VNF is currently deployed does not match a refreshed value of the key/value pair in the template #2, the CaaS manager selects a matched node based on the template #2 to complete deployment adjustment of the Pod of the first VNF.

For example, if the label of the node on which the Pod of the first VNF is currently deployed still matches a refreshed value of the key/value pair in the template #2, the CaaS manager maintains current deployment of a VDU 1.

Then, the VNFM may display, on a VNFM window to a user, a prompt that the deployment adjustment of the first VNF is completed and a deployment adjustment result of the first VNF.

Optionally, when the second request message is used to request to deploy more Pods of the first VNF on the node that meets the template #2, the method further includes:
S804: The CaaS manager deploys a Pod of a to-be-scaled-out first VNF on a matched node based on the second request message.

Optionally, the second request message includes a quantity of Pods of the to-be-scaled-out first VNF.

Then, the VNFM may display, on the VNFM window to the user, a prompt that scale-out deployment of the first VNF is completed and a scale-out result of the first VNF.

It can be learned that the foregoing VNF scheduling and expansion is based on improvement of the VNFD template, and is still limited by an input parameter in the template to some extent. The following describes a VNF scheduling method in this application. The method may implement any VNF deployment requirement. For ease of description, an example in which a first network element is a VNMF is used for description in this application.

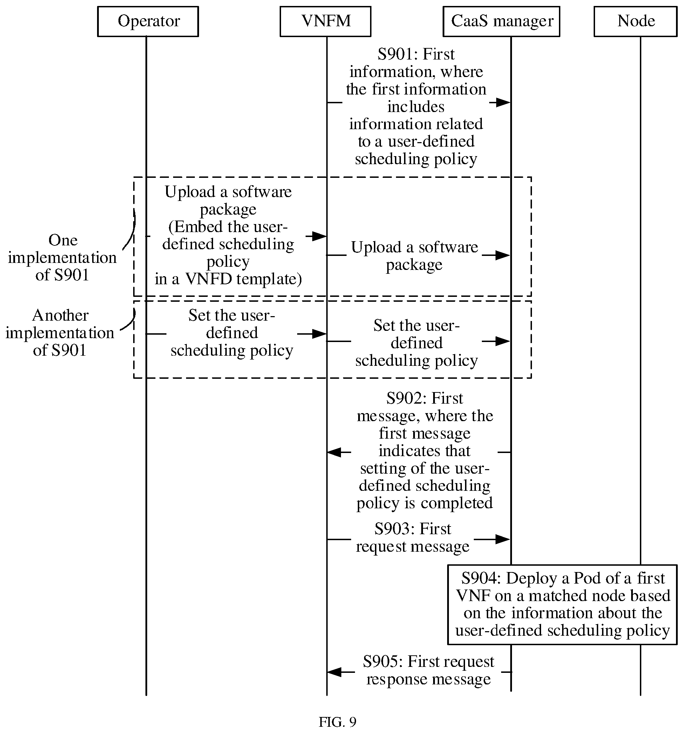

FIG. 9 is a schematic flowchart of still another VNF deployment method according to this application. The method may include the following steps.

S901: A VNFM sends first information to a CaaS manager, where the first information includes information related to a user-defined scheduling policy, and the information about the user-defined scheduling policy is personalized requirement information of a node corresponding to a deployment unit of a first VNF. Correspondingly, the CaaS manager receives the first information from the VNFM.

In this embodiment, an example in which the deployment unit is a Pod is subsequently used to describe the solution. It may be understood that when the deployment unit is a VM or a VDU in another form, this solution is still applicable.

Optionally, as shown in FIG. 9, one implementation of S901 is as follows: The first information may be included in a VNF software package that is required for containerized deployment of the first VNF and that is uploaded by an operator by using a VNFM deployment window. The software package includes a container image file and a VNFD template. For example, the first information may be embedded in the uploaded VNFD template, and then the VNFM sends the VNF software package to the CaaS manager.

Optionally, as shown in FIG. 9, another implementation of S901 is as follows: An operator sets content of the first information for the CaaS manager by using a VNFM deployment window.

Optionally, the information related to the user-defined scheduling policy includes: information about a file in which the user-defined scheduling policy is located, and definitions of an input parameter and an output parameter for the user-defined scheduling policy. For example, the information about the file in which the user-defined scheduling policy is located includes path or location information of the file.

Optionally, the information related to the user-defined scheduling policy may further includes: an effective period of the user-defined scheduling policy.

For example, the effective period of the user-defined scheduling policy may be set to be always effective, or a single effective period may be set by using an explicit instruction (including but not limited to a toggle switch, a request parameter, or the like).

For example, the input parameter includes at least one of the following: a remaining resource of a first node, a Pod that has been deployed on the first node, and label information of the first node. The first node is a candidate node that is in a resource pool and that may be used to deploy the Pod of the first VNF.

For example, the output parameter includes a matching degree of the first node, and the matching degree is determined based on a value of the input parameter and the user-defined scheduling policy. In S904, how to determine a deployment node of a first VDU based on the input parameter and the output parameter for the user-defined scheduling policy is described by using an example. Details are not described herein.

S902: The CaaS manager sends a first message to the VNFM, where the first message indicates that setting of the user-defined scheduling policy is completed. Correspondingly, the VNFM receives the first message from the CaaS manager. Then, the VNFM may display, on the VNFM window to a user, a prompt that the user-defined scheduling policy is successfully set.

S903: The VNMF sends a first request message to the CaaS manager, where the first request message is used to request to deploy the Pod of the first VNF based on the information about the user-defined scheduling policy. Correspondingly, the CaaS manager receives the first request message from the VNFM.

It may be understood that information in the first request message is transmitted by the operator to the CaaS manager by using the VNFM deployment window.

For example, that the first request message is used to request to deploy the Pod of the first VNF based on the information about the user-defined scheduling policy may be specifically understood as that the first request message is used to request to instantiate the Pod of the first VNF based on the information about the user-defined scheduling policy, or the first request message is used to request to deploy more Pods in the first VNF based on the information about the user-defined scheduling policy, or the first request message is used to request to re-adjust, based on the information about the user-defined scheduling policy, the Pod that is of the first VNF and that has been deployed.

S904: The CaaS manager deploys the Pod of the first VNF on a matched node based on the information about the user-defined scheduling policy.

For ease of understanding, how to determine the deployment node of the Pod of the first VNF is described by using an example with reference to the input parameter and the output parameter of the user-defined scheduling policy in S901. For example, content of the user-defined scheduling policy of the Pod of the first VNF is as follows: a remaining resource of a node on which the Pod of the first VNF is to be deployed needs to be greater than 20G, a Pod of a second VNF needs to be already deployed on the to-be-deployed-on node, and a Pod of a third VNF is not deployed on the to-be-deployed-on node.

First, the CaaS manager needs to first calculate a matching degree of each node (for example, the first node) that is in the resource pool and that may be used to deploy the Pod of the first VNF. Then, the CaaS manager obtains, based on an input item of the user-defined policy, a value of each input item corresponding to the first node. Specifically, in this example, the remaining resource of the first node and information about deployment of the Pod on the first node are obtained based on the input item of the user-defined policy, and then the matching degree of the first node is determined based on the obtained information about the first node and the user-defined scheduling policy. For example, when the remaining resource of the first node is 100G, the Pod of the second VNF is deployed on the first node, and the Pod of the third VNF is not deployed on the first node, a score of the matching degree of the first node is 100. For another example, when the remaining resource of the first node is 10G, the Pod of the second VNF is deployed on the first node, and the Pod of the third VNF is not deployed on the first node, a score of the matching degree of the first node is 50. For another example, when the remaining resource of the first node is 50G, both the Pod of the second VNF and the Pod of the third VNF are deployed on the first node, a score of the matching degree of the first node is 0. In this case, after calculating the matching degree of each node that is in the resource pool and that may be used to deploy a VDU 1, the CaaS manager may schedule the Pod of the first VNF to a node with a highest score of the matching degree.

It should be understood that, if an output result of the user-defined policy of the Pod of the first VNF is not unique (for example, scores of the matching degree of a plurality of nodes are 100), one node needs to be selected from the plurality of nodes. A selection method is not limited in this application.

S905: The VNMF receives a first request response message from the CaaS manager, where the first request response message indicates that the Pod of the first VNF is successfully deployed.

Then, the VNFM may display, on the VNFM window to the user, a prompt that the deployment of the Pod of the first VNF is completed and a deployment result of the Pod of the first VNF.

Optionally, a label extension mechanism in this application may also be implemented by using the user-defined scheduling policy in this embodiment. Details are not described herein again.

In the foregoing technical solution, an intervention method for more flexible container deployment/scheduling may be provided by using the user-defined scheduling policy, so that a product with a high requirement for deployment customization has an opportunity to enjoy a dividend in a containerization era.

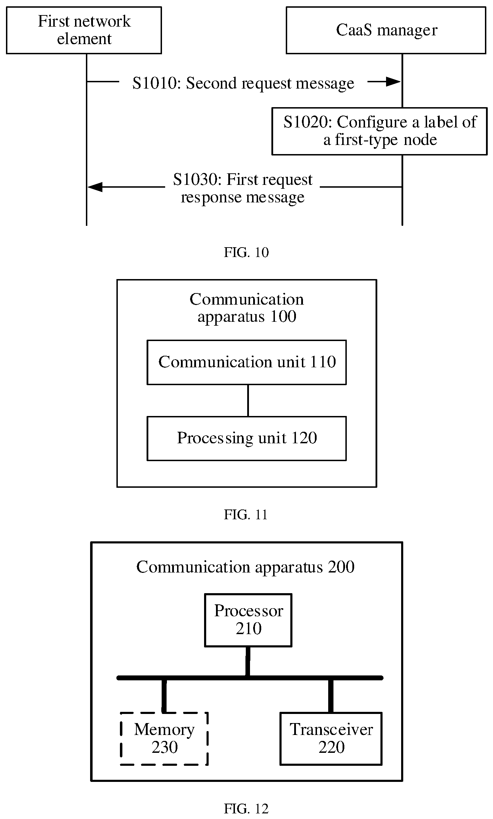

As shown in FIG. 10, this application further provides a method for configuring a label of a plurality of nodes of a same type. The method includes the following steps.

S1010: A first network element sends a third request message to a CaaS manager, where the third request message is used to request to configure information about a first-type node. Correspondingly, the CaaS manager receives the third request message from the first network element. The third request message includes first information and second information, the first information includes characteristic information of the first-type node, and the second information includes to-be-configured key/value pair information in a label of the first-type node.

Optionally, the first network element may be one of the following network elements: a network design tool, an NFVO, and a VNFM.

Configuring a label of a first-type node may be understood as adding label information to the first-type node, deleting label information for the first-type node, or modifying label information for the first-type node. This is not limited in this application.

For example, a principle of the nodes of a same type includes but is not limited to: having some common attributes (for example, all nodes in an HA), or having a public label (for example, all nodes having a same HA label).

S 1020: The CaaS manager configures the label of the first-type node based on the third request message.

S1030: The CaaS manager sends a third request response message to the first network element, where the third request response message indicates that the first-type node is successfully configured. Correspondingly, the first network element receives the third request response message from the CaaS manager.

It should be understood that, in the solution provided in this application, a scheduling mechanism between a Pod and a node is improved. The method is applicable to Pod scheduling in a virtual machine container scenario and a bare metal container scenario, and VM scheduling in a virtual machine scenario and the virtual machine container scenario. For the VM scheduling in the virtual machine scenario and the virtual machine container scenario, a purpose of adjusting a VM deployment range or expanding a resource pool in the virtual machine scenario and the virtual machine container scenario may be achieved by replacing the CaaS manager in the foregoing method with a VIM component. Details are not described herein again.

It should be understood that sequence numbers of the foregoing processes do not mean execution sequences. The execution sequences of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by a device may alternatively be implemented by a component of the device.

The foregoing describes in detail the method in embodiments of this application with reference to FIG. 1 to FIG. 10. The foregoing methods are mainly described from a perspective of interaction between a first network element and a CaaS manager. It may be understood that, to implement the foregoing functions, the first network element and the CaaS manager each include a corresponding hardware structure and/or a software module for performing each function.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes in detail communication apparatuses provided in embodiments of this application with reference to FIG. 11 and FIG. 12. It should be understood that descriptions of apparatus embodiments correspond to the descriptions of the method embodiments. Therefore, for content that is not described in detail, refer to the foregoing method embodiments. For brevity, some content is not described again. In embodiments of this application, a first network element or a CaaS manager may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. An example in which each functional module is obtained through division based on each corresponding function is used below for description.

FIG. 11 is a schematic block diagram of a communication apparatus 100 according to an embodiment of this application. As shown in FIG. 11, the communication apparatus 100 may include a communication unit 110 and a processing unit 120. The communication unit 110 may communicate with the outside, and the processing unit 120 is configured to process data. The communication unit 110 may also be referred to as a communication interface or a transceiver unit.

In a possible design, the apparatus 100 may implement the steps or processes performed by a transmitter device in the foregoing method embodiments. Specifically, the processing unit 120 is configured to perform processing-related operations of the transmitter device in the foregoing method embodiments, and the communication unit 110 is configured to perform sending-related operations of the transmitter device in the foregoing method embodiments.

In another possible design, the apparatus 100 may implement the steps or processes performed by a receiver device in the foregoing method embodiments. Specifically, the communication unit 110 is configured to perform receiving-related operations of the receiver device in the foregoing method embodiments, and the processing unit 120 is configured to perform processing-related operations of the receiver device in the foregoing method embodiments.

It should be understood that the apparatus 100 is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that, the apparatus 100 may be specifically the transmitter device in the foregoing embodiments, and may be configured to perform the processes and/or steps corresponding to the transmitter device in the foregoing method embodiments. Alternatively, the apparatus 100 may be specifically the receiver device in the foregoing embodiments, and may be configured to perform the processes and/or steps corresponding to the receiver device in the foregoing method embodiments. To avoid repetition, details are not described herein again.

The apparatus 100 in each of the foregoing solutions has a function of implementing the corresponding steps performed by the transmitter device in the foregoing methods, or the apparatus 100 in each of the foregoing solutions has a function of implementing the corresponding steps performed by the receiver device in the foregoing methods. The function may be implemented by hardware, or may be implemented by hardware executing corresponding software. The hardware or software includes one or more modules corresponding to the foregoing functions. For example, the communication unit may be replaced by a transceiver (for example, a sending unit in the communication unit may be replaced by a transmitter, and a receiving unit in the communication unit may be replaced by a receiver), and another unit, for example, the processing unit, may be replaced by a processor, to respectively perform a sending and receiving operation and a related processing operation in each method embodiment.

In addition, the communication unit may alternatively be a transceiver circuit (for example, may include a receiving circuit and a sending circuit), and the processing unit may be a processing circuit. The communication unit may be an input/output circuit or a communication interface. The processing unit is a processor, a microprocessor, or an integrated circuit integrated on the chip. This is not limited herein.

FIG. 12 is a schematic block diagram of a communication apparatus 200 according to an embodiment of this application. The apparatus 200 includes a processor 210 and a transceiver 220. The processor 210 and the transceiver 220 communicate with each other through an internal connection path, and the processor 210 is configured to execute instructions, to control the transceiver 220 to send a signal and/or receive a signal.

Optionally, the apparatus 200 may further include a memory 230. The memory 230 communicates with the processor 210 and the transceiver 220 through an internal connection path. The memory 230 is configured to store instructions, and the processor 210 may execute the instructions stored in the memory 230. In a possible implementation, the apparatus 200 is configured to implement the processes and steps corresponding to the transmitter device in the foregoing method embodiments. In another possible implementation, the apparatus 200 is configured to implement the processes and steps corresponding to the receiver device in the foregoing method embodiments.

It should be understood that, the apparatus 200 may be specifically the transmitter device or the receiver device in the foregoing embodiments, or may be a chip or a chip system. Correspondingly, the transceiver 220 may be a transceiver circuit of the chip. This is not limited herein. Specifically, the apparatus 200 may be configured to perform the steps and/or processes corresponding to the transmitter device or the receiver device in the foregoing method embodiments. Optionally, the memory 230 may include a read-only memory and a random access memory, and provide instructions and data to the processor. A part of the memory may further include a non-volatile random access memory. For example, the memory may further store information of a device type. The processor 210 may be configured to execute the instructions stored in the memory. When the processor 210 executes the instructions stored in the memory, the processor 210 is configured to perform the steps and/or processes of the method embodiment corresponding to the transmitter device or the receiver device.

In an implementation process, steps in the foregoing methods may be implemented by using a hardware integrated logical circuit in the processor, or by using instructions in a form of software. The steps of the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory or an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments may be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory or an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

In addition, this application further provides a computer-readable storage medium. The computer-readable storage medium stores computer instructions. When the computer instructions are run on a computer, the methods in method embodiments of this application are performed.

According to the methods provided in embodiments of this application, this application further provides a computer program product. The computer program product includes computer program code or instructions. When the computer program code or the instructions are run on a computer, the methods in method embodiments of this application are performed.

According to the methods provided in embodiments of this application, this application further provides a computer-readable medium. The computer-readable medium stores program code. When the program code is run on a computer, the computer is enabled to perform the methods in method embodiments of this application.

In addition, this application further provides a chip, and the chip includes a processor. A memory configured to store a computer program is disposed independently of the chip, and the processor is configured to execute the computer program stored in the memory, so that the methods in method embodiments of this application are performed.

Further, the chip may further include a communication interface. The communication interface may be an input/output interface, an interface circuit, or the like. Further, the chip may further include the memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for deploying a virtualized network function VNF, comprising:
obtaining a first virtualized network function descriptor VNFD template, wherein the first VNFD template is used to deploy a deployment unit of a first VNF, and the first VNFD template comprises a plurality of key/value pairs;
obtaining a first value of the key/value pair, wherein the first value comprises a value of a first key/value pair in the plurality of key/value pairs, and the value of the first key/value pair indicates that the first key/value pair does not function on deployment of the deployment unit of the first VNF; and
sending a first request message to a container as a service CaaS manager based on the first VNFD template and the first value, wherein the first request message is used to request to deploy the deployment unit of the first VNF on a node that meets the first VNFD template and the first value of the key/value pair.

2. The method according to claim 1, wherein
the first request message comprises the first VNFD template and the first value; or
the first request message comprises an index of the first VNFD template and the first value; or
the first request message comprises a third VNFD template and a third value of one or more key/value pairs in the third VNFD template, wherein the third VNFD template is the first VNFD template and does not comprise the first key/value pair, and the third value is the first value and does not comprise the value of the first key/value pair.

3. The method according to claim 1 or 2, wherein the node that meets the first VNFD template and the first value of the key/value pair comprises:
a node whose label matches the first VNFD template and the first value; or
a node whose label matches the third VNFD template and the third value.

4. The method according to any one of claims 1 to 3, wherein the value of the first key/value pair is a value of KEY in the first key/value pair.

5. The method according to any one of claims 1 to 3, wherein the value of the first key/value pair is a value of VALUE in the first key/value pair.

6. The method according to claim 5, wherein the value of the first key/value pair is a value of one of a plurality of VALUE comprised in the first key/value pair.

7. The method according to any one of claims 1 to 6, wherein that the first request message is used to request to deploy the deployment unit of the first VNF on a node that meets the first VNFD template and the first value comprises:
the first request message is used to request to re-deploy the deployment unit of the first VNF on the node that meets the first VNFD template and the first value of the key/value pair; or
the first request message is used to request to deploy more deployment units of the first VNF on the node that meets the first VNFD template and the first value of the key/value pair.

8. The method according to claim 7, wherein before the obtaining a first value of the key/value pair, the method further comprises:
obtaining a second value of the key/value pair, wherein the second value comprises the value of the first key/value pair, and the value of the first key/value pair in the second value indicates that the first key/value pair functions on the deployment of the deployment unit of the first VNF; and
sending a second request message to the CaaS manager based on the first VNFD template and the second value, wherein the second request message is used to request to deploy the deployment unit of the first VNF on a node that meets the first VNFD template and the second value.

9. The method according to any one of claims 1 to 8, wherein the method further comprises:
sending a third request message to the CaaS manager, wherein the third request message is used to request to configure a label of a first-type node, the third request message comprises first information and second information, the first information comprises characteristic information of the first-type node, and the second information comprises to-be-configured key/value pair information in the label of the first-type node; and
receiving a third request response message from the CaaS manager, wherein the third request response message indicates that the label of the first-type node is successfully configured.

10. The method according to any one of claims 1 to 9, wherein the method further comprises:
receiving a first request response message from the CaaS manager, wherein the first request response message indicates that the deployment unit of the first VNF is successfully deployed.

11. The method according to any one of claims 1 to 10, wherein the deployment unit is a point of deployment Pod, or the deployment unit is a virtual machine VM.

12. A method for deploying a virtualized network function VNF, comprising:
receiving a first request message from a first network element, wherein the first request message is used to request to deploy a deployment unit of a first VNF on a node that meets a first virtualized network function descriptor VNFD template and a first value, the first VNFD template is used to deploy the deployment unit of the first VNF, the first VNFD template comprises one or more key/value pairs, the first value is a value of the key/value pair, the first value comprises a value of a first key/value pair in the one or more key/value pairs, and the value of the first key/value pair indicates that the first key/value pair does not function on development of the deployment unit of the first VNF; and
deploying the deployment unit of the first VNF based on the first request message.

13. The method according to claim 12, wherein
the first request message comprises the first VNFD template and the first value of the key/value pair; or
the first request message comprises an index of the first VNFD template and the first value of the key/value pair.

14. The method according to claim 12 or 13, wherein the node that meets the first VNFD template and the first value of the key/value pair comprises: a node whose label matches the first VNFD template and the first value.

15. The method according to any one of claims 12 to 14, wherein the value of the first key/value pair is a value of KEY in the first key/value pair.

16. The method according to any one of claims 12 to 14, wherein the value of the first key/value pair is a value of VALUE in the first key/value pair.

17. The method according to claim 16, wherein the value of the first key/value pair is a value of one of a plurality of VALUE comprised in the first key/value pair.

18. The method according to any one of claims 12 to 17, wherein that the first request message is used to request to deploy a deployment unit of a first VNF on a node that meets a first VNFD template and a first value of a key/value pair comprises:
the first request message is used to request to re-deploy the deployment unit of the first VNF on the node that meets the first VNFD template and the first value of the key/value pair; or
the first request message is used to request to deploy more deployment units of the first VNF on the node that meets the first VNFD template and the first value of the key/value pair.

19. The method according to claim 18, wherein before the receiving a first request message from a first network element, the method further comprises:
receiving a second request message from the first network element, wherein the second request message is used to request to deploy the deployment unit of the first VNF on a node that meets the first VNFD template and a second value, the second value is a value of the key/value pair, the second value comprises the value of the first key/value pair in the plurality of key/value pairs, and a value of a second key/value pair in the second value indicates that the second key/value pair functions on the development of the deployment unit of the first VNF; and
deploying the deployment unit of the first VNF based on the second request message.

20. The method according to claim 19, wherein when the first request message is used to request to re-deploy the deployment unit of the first VNF, the deploying the deployment unit of the first VNF based on the first request message comprises:
if a first node and a second node are a same node, deploying the deployment unit of the first VNF on the second node; or if a first node and a second node are different nodes, re-deploying the deployment unit of the first VNF from the second node to the first node, wherein the first node is a node that meets the first VNFD template and the first value and on which the deployment unit of the first VNF is to be re-deployed, and the second node is a node on which the deployment unit of the first VNF is currently deployed and that meets the first VNFD template and the second value.

21. The method according to any one of claims 12 to 20, wherein the method further comprises:
receiving a third request message from the first network element, wherein the third request message is used to request to configure a label of a first-type node, the third request message comprises first information and second information, the first information comprises characteristic information of the first-type node, and the second information comprises to-be-configured key/value pair information in the label of the first-type node; and
sending a third request response message to the first network element, wherein the third request response message indicates that the label of the first-type node is successfully configured.

22. The method according to any one of claims 12 to 21, wherein the method further comprises:
sending a first request response message to the first network element, wherein the first request response message indicates that the deployment unit of the first VNF is successfully deployed.

23. The method according to any one of claims 12 to 22, wherein the deployment unit is a Pod, or the deployment unit is a virtual machine VM.

24. The method according to any one of claims 12 to 23, wherein the first network element is a virtualized network function manager VNFM or a network functions virtualization orchestrator NFVO.

25. A method for deploying a virtualized network function VNF, comprising:
obtaining a first virtualized network function descriptor VNFD template, wherein the first VNFD template is used to deploy a deployment unit of a first VNF, the first VNFD template comprises one or more key/value pairs, and a quantity of values of first VALUE in a first key/value pair in the one or more key/value pairs is variable;
obtaining a first value of the key/value pair, wherein the first value comprises a first value set comprising a value of first VALUE; and
sending a first request message to a container as a service CaaS manager based on the first VNFD template and the first value, wherein the first request message is used to request to deploy the deployment unit of the first VNF on a node that meets the first VNFD template and the first value.

26. The method according to claim 25, wherein before the obtaining a first value, the method further comprises:
obtaining a second value of the key/value pair, wherein the second value comprises a second value set comprising a value of first VALUE, the second value set comprises values of a second quantity, the first value set comprises values of a first quantity, and the second quantity is different from the first quantity; and
sending a second request message to the container as a service CaaS manager based on the first VNFD template and the second value, wherein the second request message is used to request to deploy the deployment unit of the first VNF on a node that meets the first VNFD template and the second value.

27. The method according to claim 25 or 26, wherein that the first request message is used to request to deploy the deployment unit of the first VNF on a node that meets the first VNFD template and the first value comprises:
the first request message is used to request to re-deploy the deployment unit of the first VNF on the node that meets the first VNFD template and the first value of the key/value pair; or
the first request message is used to request to deploy more deployment units of the first VNF on the node that meets the first VNFD template and the first value of the key/value pair.

28. The method according to any one of claims 25 to 27, wherein when the value of first VALUE comprises a plurality of values, two adjacent values in the plurality of values are connected by using a first character.

29. The method according to any one of claims 25 to 28, wherein
the first request message comprises the first VNFD template and the first value; or
the first request message comprises an index of the first VNFD template and the first value.

30. The method according to any one of claims 25 to 29, wherein the node that meets the first VNFD template and the first value of the key/value pair comprises: a node whose label matches the first VNFD template and the first value.

31. The method according to any one of claims 25 to 30, wherein the method further comprises:
sending a third request message to the CaaS manager, wherein the third request message is used to request to configure a label of a first-type node, the third request message comprises first information and second information, the first information comprises characteristic information of the first-type node, and the second information comprises to-be-configured key/value pair information in the label of the first-type node; and
receiving a third request response message from the CaaS manager, wherein the third request response message indicates that the label of the first-type node is successfully configured.

32. The method according to any one of claims 25 to 31, wherein the method further comprises:
receiving a first request response message from the CaaS manager, wherein the first request response message indicates that the deployment unit of the first VNF is successfully deployed.

33. The method according to any one of claims 25 to 32, wherein the deployment unit is a Pod, or the deployment unit is a virtual machine VM.

34. A method for deploying a virtualized network function VNF, comprising:
receiving a first request message from a first network element, wherein the first request message is used to request to deploy a deployment unit of a first VNF on a node that meets a first virtualized network function descriptor VNFD template and a first value, the first VNFD template is used to deploy the deployment unit of the first VNF, the first VNFD template comprises one or more key/value pairs, a quantity of values of first VALUE in a first key/value pair in the one or more key/value pairs is variable, the first value is a value of the key/value pair, and the first value comprises a first value set comprising a value of first VALUE; and
deploying the deployment unit of the first VNF based on the first request message.

35. The method according to claim 34, wherein that the first request message is used to request to deploy a deployment unit of a first VNF on a node that meets a first VNFD template and a first value comprises:
the first request message is used to request to re-deploy the deployment unit of the first VNF on the node that meets the first VNFD template and the first value of the key/value pair; or
the first request message is used to request to deploy more deployment units of the first VNF on the node that meets the first VNFD template and the first value of the key/value pair.

36. The method according to claim 34 or 35, wherein before the receiving a first request message from a first network element, the method further comprises:
receiving a second request message from the first network element, wherein the second request message is used to request to deploy the deployment unit of the first VNF on a node that meets the first virtualized network function descriptor VNFD template and a second value, the second value is a value of the key/value pair, the second value comprises a second value set comprising a value of first VALUE, the second value set comprises values of a second quantity, the first value set comprises values of a first quantity, and the second quantity is different from the first quantity; and
deploying the deployment unit of the first VNF based on the first request message.

37. The method according to claim 36, wherein when the first request message is used to request to re-deploy the deployment unit of the first VNF, the deploying the deployment unit of the first VNF based on the first request message comprises:
if a first node and a second node are a same node, deploying the deployment unit of the first VNF on the second node; or if a first node and a second node are different nodes, re-deploying the deployment unit of the first VNF from the second node to the first node, wherein the first node is a node that meets the first VNFD template and the first value and on which the deployment unit of the first VNF is to be re-deployed, and the second node is a node on which the deployment unit of the first VNF is currently deployed and that meets the first VNFD template and the second value.

38. The method according to any one of claims 34 to 37, wherein when a value set of VALUE in one of the one or more key/value pairs comprises a plurality of values, two adjacent values in the plurality of values are connected by using a first character.

39. The method according to any one of claims 34 to 38, wherein
the first request message comprises the first VNFD template and the first value; or
the first request message comprises an index of the first VNFD template and the first value.

40. The method according to any one of claims 34 to 39, wherein the node that meets the first VNFD template and the first value of the key/value pair comprises: a node whose label matches the first VNFD template and the first value.

41. The method according to any one of claims 34 to 40, wherein the method further comprises:
receiving a third request message from the first network element, wherein the third request message is used to request to configure a label of a first-type node, the third request message comprises first information and second information, the first information comprises characteristic information of the first-type node, and the second information comprises to-be-configured key/value pair information in the label of the first-type node; and
sending a third request response message to the first network element, wherein the third request response message indicates that the label of the first-type node is successfully configured.

42. The method according to any one of claims 34 to 41, wherein the method further comprises:
sending a first request response message to the first network element, wherein the first request response message indicates that the deployment unit of the first VNF is successfully deployed.

43. The method according to any one of claims 34 to 42, wherein the deployment unit is a Pod, or the deployment unit is a virtual machine VM.

44. The method according to any one of claims 34 to 43, wherein the first network element is a virtualized network function manager VNFM or a network functions virtualization orchestrator NFVO.

45. A communication apparatus, comprising a module configured to perform the method according to any one of claims 1 to 44.

46. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 44.

47. A computer-readable storage medium, wherein the computer-readable storage medium stores computer instructions, and when the computer instructions are run on a computer, the method according to any one of claims 1 to 44 is performed.
